(19) Europäisches Patentamt
European Patent Office
Office européen des brevets

(11) EP 4 316 244 A1

(12) EUROPEAN PATENT APPLICATION
published in accordance with Art. 153(4) EPC

(43) Date of publication:
**07.02.2024 Bulletin 2024/06**

(21) Application number: **22775430.6**

(22) Date of filing: **18.03.2022**

(51) International Patent Classification (IPC):
***A01N 43/90*** *(2006.01)* ***A01N 33/22*** *(2006.01)*
***A01N 35/10*** *(2006.01)* ***A01N 37/22*** *(2006.01)*
***A01N 37/26*** *(2006.01)* ***A01N 37/40*** *(2006.01)*
***A01N 41/00*** *(2006.01)* ***A01N 43/10*** *(2006.01)*
***A01N 43/16*** *(2006.01)* ***A01N 43/36*** *(2006.01)*
***A01N 43/40*** *(2006.01)* ***A01N 43/54*** *(2006.01)*
***A01N 43/653*** *(2006.01)* ***A01N 43/70*** *(2006.01)*
***A01N 43/707*** *(2006.01)* ***A01N 43/80*** *(2006.01)*
***A01N 43/824*** *(2006.01)* ***A01N 43/84*** *(2006.01)*
***A01N 43/88*** *(2006.01)* ***A01N 47/12*** *(2006.01)*
***A01N 47/16*** *(2006.01)*

(52) Cooperative Patent Classification (CPC):
**A01N 33/18; A01N 33/22; A01N 35/10; A01N 37/22; A01N 37/26; A01N 37/40; A01N 39/04; A01N 41/10; A01N 43/10; A01N 43/16; A01N 43/36; A01N 43/40; A01N 43/54; A01N 43/653; A01N 43/70;** (Cont.)

(86) International application number:
**PCT/JP2022/012499**

(87) International publication number:
**WO 2022/202642 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2021 JP 2021047968**

(71) Applicant: **Nippon Soda Co., Ltd.**
**Tokyo 100-7010 (JP)**

(72) Inventors:
- **HORIKOSHI, Humberto Mitio**
  **Odawara-shi, Kanagawa 250-0280 (JP)**
- **KATO, Kazushige**
  **Odawara-shi, Kanagawa 250-0280 (JP)**
- **IKEDA, Yoji**
  **Odawara-shi, Kanagawa 250-0280 (JP)**

(74) Representative: **Mewburn Ellis LLP**
**Aurora Building**
**Counterslip**
**Bristol BS1 6BX (GB)**

# (54) HERBICIDAL COMPOSITION

(57) The present invention provides a herbicidal composition containing:
at least one compound (I) selected from a compound represented by a formula (I)

EP 4 316 244 A1

[Chemical Formula 1]

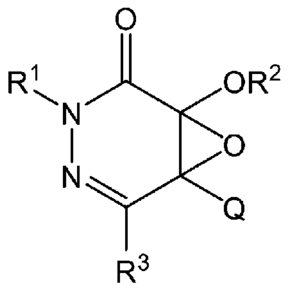

(I)

(wherein $R^1$ represents a substituted or unsubstituted $C_{1-6}$ alkyl group or the like, $R^2$ represents a substituted or unsubstituted $C_{1-6}$ alkyl group or the like, $R^3$ represents a hydrogen atom, a substituted or unsubstituted $C_{1-6}$ alkyl group or the like, and Q represents a substituted or unsubstituted phenyl group or the like) or a salt thereof; and a compound (II) having herbicidal activity such as haloxyfop-methyl, clethodim, S-metolachlor, epyrifenacil, isoxaflutole, sethoxydim and tepraloxydim.

(52) Cooperative Patent Classification (CPC): (Cont.)
**A01N 43/707; A01N 43/80; A01N 43/82; A01N 43/84; A01N 43/88; A01N 43/90; A01N 47/12; A01N 47/16; A01N 47/24; A01N 47/30; A01N 47/34; A01N 47/36; A01N 47/38; A01N 57/20; A01P 13/00**

**Description**

BACKGROUND OF THE INVENTION

Field of the Invention

The present invention relates to a herbicidal composition which has a reliable weed control effect even at a low dose, causes less phytotoxicity to crops, and is highly safe for the environment.

Description of the Related Art

In the cultivation of agricultural and horticultural crops, herbicides may be used for controlling weeds. Various compounds have been proposed so far as active ingredients of herbicides.

For example, Patent Document 1 discloses a compound represented by a formula (A), and the like.

[Chemical Formula 1]

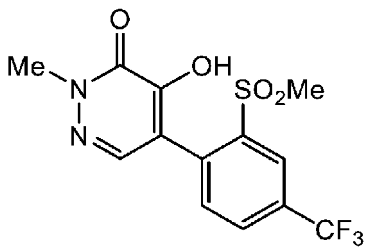

(A)

PRIOR ART DOCUMENTS

[Patent Document]

[Patent Document 1] WO2013 / 050421A1

SUMMARY OF THE INVENTION

Problems to be Solved by the Invention

Herbicides are required not only to have an excellent weed control effect, but also to have less phytotoxicity to crops, to be less likely to remain in the environment, and not to pollute the environment.

An object of the present invention is to provide a herbicidal composition which has a reliable weed control effect even at a low dose, causes less phytotoxicity to crops, and is highly safe for the environment.

Means for Solving the Problem

As a result of intensive studies in order to achieve the above object, the present invention including the following embodiments has been completed.

[1] A herbicidal composition containing at least one compound (1) selected from a compound represented by a formula (I) or a salt thereof, and at least one compound (II) having herbicidal activity.

[Chemical Formula 2]

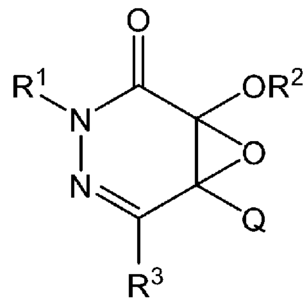

(I)

In the formula (1),

$R^1$ represents a substituted or unsubstituted $C_{1-6}$ alkyl group, a substituted or unsubstituted $C_{2-6}$ alkenyl group, a substituted or unsubstituted $C_{2-6}$ alkynyl group, a substituted or unsubstituted $C_{3-6}$ cycloalkyl group, or a 5- to 6-membered cyclic ether group,
$R^2$ represents a substituted or unsubstituted $C_{1-6}$ alkyl group, a substituted or unsubstituted $C_{2-6}$ alkenyl group, or a substituted or unsubstituted $C_{2-6}$ alkynyl group,
$R^3$ represents a hydrogen atom, a substituted or unsubstituted $C_{1-6}$ alkyl group, a substituted or unsubstituted $C_{2-6}$ alkenyl group, a substituted or unsubstituted $C_{2-6}$ alkynyl group, a substituted or unsubstituted $C_{1-6}$ alkoxy group, a substituted or unsubstituted $C_{3-6}$ cycloalkyl group, or a substituted or unsubstituted phenyl group, and
Q represents a substituted or unsubstituted phenyl group or a substituted or unsubstituted naphthyl group.

[2] The herbicidal composition according to [1], wherein the aforementioned compound (11) is

(B1) a herbicide belonging to a group of acetyl-CoA carboxylase (ACCase) inhibitors,
(B2) a herbicide belonging to a group of acetolactate synthase (ALS) or acetohydroxyacid synthase (AHAS) inhibitors,
(B3) a herbicide belonging to a group of microtubule polymerization inhibitors,
(B4) a herbicide belonging to a group of indoleacetic acid-like active (synthetic auxin) agents,
(B5) a herbicide belonging to a group of photosynthesis (photosystem II) inhibitors - serine 264 binders,
(B6) a herbicide belonging to a group of photosynthesis (photosystem II) inhibitors - histidine 215 binders,
(B9) a herbicide belonging to a group of 5-enolpyruvylshikimate-3-phosphate (EPSP) synthase inhibitors,
(B10) a herbicide belonging to a group of glutamine synthetase inhibitors,
(B12) a herbicide belonging to a group of inhibitors of phytoene desaturase (PDS) in the carotenoid biosynthesis pathway inducing chlorosis,
(B13) a herbicide belonging to a group of 1-deoxy-D-xylulose 5-phosphate (DOXP) synthase inhibitors inducing chlorosis,
(B14) a herbicide belonging to a group of protoporphyrinogen oxidase (PPO) inhibitors,
(B15) a herbicide belonging to a group of very long chain fatty acid (VLCFA) synthesis inhibitors,
(B18) a herbicide belonging to a group of dihydropteroate (DHP) synthase inhibitors,
(B19) a herbicide belonging to a group of auxin transport inhibitors,
(B22) a herbicide belonging to a group of photosystem I electron conversion agents,
(B23) a herbicide belonging to a group of mitosis / microtubule formation inhibitors,
(B24) a herbicide belonging to a group of uncoupling (membrane disrupting) agents,
(B27) a herbicide belonging to a group of 4-hydroxyphenylpyruvate dioxygenase (4-HPPD) inhibitors inducing chlorosis,
(B28) a herbicide belonging to a group of dihydroorotate dehydrogenase (DHODH) inhibitors,
(B29) a herbicide belonging to a group of cell wall (cellulose) synthesis inhibitors,
(B30) a herbicide belonging to a group of fatty acid thioesterase inhibitors,
(B31) a herbicide belonging to a group of serine-threonine protein phosphatase inhibitors,
(B32) a herbicide belonging to a group of solanesyl diphosphate synthase inhibitors,
(B33) a herbicide belonging to a group of homogentisate solanesyltransferase inhibitors,
(B34) a herbicide belonging to a group of lycopene cyclase inhibitors, or
(B0) other herbicides with unknown action mechanisms.

[3] The herbicidal composition according to [2], wherein the aforementioned compound (II) is

(B1) clodinafop-propargyl, clofop, cyhalofop-butyl, diclofop-methyl, fenoxaprop-ethyl, fenthiaprop, fluazifop-butyl, haloxyfop-methyl, isoxapyrifop, metamifop, quizalofop-ethyl, alloxydim, butroxydim, clethodim, cloproxydim, cycloxydim, profoxydim, sethoxydim, tepraloxydim, tralkoxydim, pinoxaden, propaquizafop, fluazifop;
(B2) imazamethabenz-methyl, imazamox, imazapic, imazapyr, imazaquin, imazethapyr, bispyribac-sodium, pyribenzoxim (prodrug of bispyribac), pyriftalid, pyriminobac-methyl, pyrithiobac-sodium, pyrimisulfan, triafamone, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfron, flucetosulfuron, flupyrsulfuron-methyl-Na, foramsulfuron, halosulfuron-methyl, imazosulfuron, iodosulfuron-methyl-Na, mesosulfuron-methyl, metazosulfuron, metsulfuron-methyl, nicosulfuron, orthosulfamuron, oxasulfuron, primisulfuron-methyl, propyrisulfuron, prosulfuron, pyrazosulfuron-ethyl, rimsulfuron, sulfometuron-methyl, sulfosulfuron, thifensulfuron-methyl, triasulfuron, tribenuron-methyl, trifloxysulfuron-Na, triflusulfuron-methyl, tritosulfuron, flucarbazone, flucarbazone-Na, propoxycarbazone-Na, thiencarbazone-methyl, cloransulam-methyl, diclosulam, florasulam, flumetsulam, metosulam, penoxsulam, pyroxsulam, iodosulfuron-methyl, monosulfuron-methyl, iofensulfuron, metosulfam, mesosulfuron, trifloxysulfuron;
(B3) propyzamide (pronamide), tetrachlorothiophene (TCTP), chlorthal-dimethyl (DCPA), bethrodine (benefin, benfluralin), butralin, dinitramine, ethalfluralin, fluchloralin, isopropalin, nitralin, oryzalin, pendimethalin, prodiamine, profluralin, trifluralin, butamifos, DMPA, dithiopyr, thiazopyr, chlorthal;
(B4) chloramben, MDBA (dicamba), TCBA (2,3,8-TBA) (TBA), benazolin-ethyl, 2,4,5-T, 2,4-PA (2,4-D), 2,4-DB, 2,4-D 2-ethylhexyl ester, 2,4-D amine, clomeprop, dichlorprop, fenoprop, MCPA, MCPB, MCPP (mecoprop), chlorfenac (fenac), chlorfenprop, aminopyralid, clopyralid, florpyrauxifen, halauxifen, halauxifen-methyl, picloram, fluroxypyr, triclopyr, aminocyclopyrachlor, quinclorac, quinmerac, chlorflurenol, chlorflurenol-methyl, benazolin;
(B5) chloranocryl (dicryl), CMMP (pentanochlor), DCPA (propanil), chlorprocarb, desmedipham, phenisopham, phenmedipham, brompyrazon, PAC (chloridazon, pyrazon), ametryn, atraton, atrazine, aziprotryne (aziprotryn), chlorazine, CP 17029, cyanazine, cyprazine, desmetryn, dimethametryn, dipropetryn, eglinazine-ethyl, ipazine, methoprotryne (methoprotryn), procyazine, proglinazine-ethyl, prometon, prometryn, propazine, sebuthylazine, secbumeton, CAT (simazine), simetryn, terbumeton, terbuthylazine, terbutryn, trietazine, ethiozin, hexazinone, isomethiozin, metamitron, metribuzin, amicarbazone, bromacil, isocil, lenacil, terbacil, benzthiazuron, bromuron, buturon, chlorbromuron, chlorotoluron, chloroxuron, difenoxuron, dimefuron, DCMU (diuron), ethidimuron, fenuron, fluometuron, fluothiuron, isoproturon, isouron, linuron, methabenzthiazuron, metobenzuron, metobromuron, metoxuron, monolinuron, CMU (monuron), neburon, parafluron, siduron, tebuthiuron, thiazafluron, cypromid, cybutryne, karbutilate;
(B6) bentazon, bromofenoxim, bromoxynil, ioxynil, pyridate, pyridafol;
(B9) glyphosate;
(B10) bialaphos (bilanafos), glufosinate-ammonium, glufosinate;
(B12) fluridone, flurtamone, flurochloridone, norflurazon, beflubutamid, diflufenican, picolinafen, metflurazon;
(B13) bixlozone, clomazone;
(B14) acifluorfen, bifenox, chlomethoxynil (chlomethoxyfen), CNP (chlornitrofen), fluorodifen, fluoroglycofen-ethyl, CFNP (fluoronitrofen), fomesafen, lactofen, NIP (nitrofen), oxyfluorfen, butafenacil, chlorphthalim, cinidon-ethyl, flumiclorac-pentyl, flumioxazin, flumipropyn, fluthiacet-methyl, pentoxazone, saflufenacil, tiafenacil, trifludimoxazin, oxadiargyl, oxadiazon, azafenidin, carfentrazone-ethyl, sulfentrazone, pyraclonil, pyraflufen-ethyl, epyrifenacil, halosafen, ethoxyfen-ethyl, thidiazimin, benzfendizone, profluazol, flufenpyr-ethyl, bencarbazone;
(B15) cafenstrole, fentrazamide, ipfencarbazone, benfuresate, ethofumesate, fenoxasulfone, pyroxasulfone, indanofan, tridiphane, butylate, hexylthiocarbam (cycloate), dimepiperate, EPTC, esprocarb, molinate, orbencarb, pebulate, prosulfocarb, benthiocarb (thiobencarb), tiocarbazil, tri-allate, vernolate, acetochlor, alachlor, CDAA (allidochlor), butachlor, butenachlor, delachlor, diethatyl-ethyl, dimethachlor, dimethenamid, dimethenamid-P, metazachlor, metolachlor, S-metolachlor, pethoxamid, pretilachlor, propachlor, propisochlor, prynachlor, thenylchlor, flufenacet, mefenacet, anilofos, piperophos, diallate, dimesulfazet;
(B18) asulam;
(B19) diflufenzopyr-sodium, NPA (naptalam), diflufenzopyr;
(B22) cyperquat, diquat, morfamquat, paraquat;
(B23) barban, carbetamide, chlorbufam, IPC (chlorpropham), propham, swep;
(B24) dinosam, DNBP (dinoseb), dinoterb, DNOC, etinofen, medinoterb;
(B27) isoxaflutole, benzofenap, pyrasulfotole, pyrazolate (pyrazolynate), pyrazoxyfen, tolpyralate, topramezone, bicyclopyrone, fenquinotrione, mesotrione, sulcotrione, tefuryltrione, tembotrione, benzobicyclon, isoxachlortole, methoxyphenone, ketospiradox, tripyrasulfone, fenpyrazone, dioxopyritrione, cypyrafluone, bipyrazone, benquitrione, lancotrione sodium;
(B28) tetflupyrolimet;

(B29) indaziflam, triaziflam, isoxaben, DCBN (chlorthiamid), DBN (dichlobenil), flupoxam;
(B30) cinmethylin, methiozolin;
(B31) endothall;
(B32) aclonifen;
(B33) cyclopyrimorate;
(B34) ATA (amitrole); or
(B0) diphenamid, naproanilide, napropamide, flamprop-M, tebutam, SAP (bensulide), DPA (dalapon), tetrapion (flupropanate), TCA, mefluidide, perfluidone, bromobutide, cumyluron, difenzoquat, DSMA, dymron (daimuron), etobenzanid, fosamine, methyldymron, monalide, MSMA, oleic acid, oxaziclomefone, pelargonic acid, pyributicarb, ACN (quinoclamine), flamprop-isopropyl, dazomet, sodium chlorate, CAMA, cacodylic acid, metam, rimisoxafen, cyclopyranil, clacyfos.

[4] The herbicidal composition according to [3], wherein the aforementioned compound (II) is haloxyfop-methyl, clethodim, pinoxaden, foramsulfuron, rimsulfuron, thifensulfuron-methyl, flucarbazone, flucarbazone-Na, thiencarbazone-methyl, flumetsulam, pendimethalin, trifluralin, MDBA (dicamba), 2,4-PA (2,4-D), 2,4-D 2-ethylhexyl ester, 2,4-D amine, MCPA, clopyralid, picloram, fluroxypyr, atrazine, CAT (simazine), terbuthylazine, metribuzin, amicarbazone, chlorotoluron, bentazon, bromoxynil, glyphosate, glufosinate-ammonium, picolinafen, clomazone, flumioxazin, saflufenacil, carfentrazone-ethyl, pyroxasulfone, prosulfocarb, tri-allate, acetochlor, alachlor, dimethenamid, dimethenamid-P, metolachlor, S-metolachlor, flufenacet, asulam, diflufenzopyr-sodium, diquat, mesotrione, isoxaben, cinmethylin, aclonifen, cyclopyrimorate, ATA (amitrole), epyrifenacil, isoxaflutole, sethoxydim, tepraloxydim, tetflupyrolimet, nicosulfuron, halauxifen, halauxifen-methyl, hexazinone, tebuthiuron, topramezone, flupoxam, sulfentrazone, halosulfuron-methyl, rimisoxafen, linuron or diflufenican.
[5] The herbicidal composition according to [4], wherein the aforementioned compound (II) is haloxyfop-methyl, clethodim, pinoxaden, foramsulfuron, rimsulfuron, thifensulfuron-methyl, flucarbazone, flucarbazone-Na, thiencarbazone-methyl, flumetsulam, pendimethalin, trifluralin, MDBA (dicamba), 2,4-PA (2,4-D), 2,4-D 2-ethylhexyl ester, 2,4-D amine, MCPA, clopyralid, picloram, fluroxypyr, atrazine, CAT (simazine), terbuthylazine, metribuzin, amicarbazone, chlorotoluron, bentazon, bromoxynil, glyphosate, glufosinate-ammonium, picolinafen, clomazone, flumioxazin, saflufenacil, carfentrazone-ethyl, pyroxasulfone, prosulfocarb, tri-allate, acetochlor, dimethenamid-P, S-metolachlor, flufenacet, diflufenzopyr-sodium, diquat, mesotrione, cinmethylin, epyrifenacil, sethoxydim, halauxifen, topramezone, rimisoxafen, linuron or diflufenican.
[6] The herbicidal composition according to any one of [1] to [5], which contains at least two compounds (II).
[7] The herbicidal composition according to [6], which contains at least three compounds (II).
[8] The herbicidal composition according to any one of [1] to [7], further containing at least one compound (III) as a phytotoxicity reducing agent.
[9] The herbicidal composition according to any one of [1] to [8], wherein the aforementioned compound (III) is cloquintocet-mexyl, cyprosulfamide, furilazole, isoxadifen-ethyl, mefenpyr-diethyl or benoxacor.

Effects of the Invention

Since the herbicidal composition of the present invention has a reliable weed control effect even at a low dose, causes less phytotoxicity to crops, and is highly safe for the environment, it is useful as an active ingredient of a herbicide. The herbicidal composition of the present invention can be safely used for controlling weeds in the cultivation of agricultural and horticultural crops.

## DETAILED DESCRIPTION OF THE INVENTION

A herbicidal composition of the present invention (hereinafter, may be referred to as a "composition of the present invention" for simplicity) contains a compound (1) and a compound (II).

[Compound (1)]

The compound (I) is at least one compound selected from a compound represented by a formula (I) or a salt thereof.

[Chemical Formula 3]

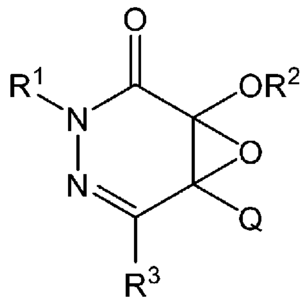

(I)

The compound (I) also includes hydrates, various types of solvates, polymorphs of crystals, and the like. The compound (I) may have stereoisomers based on asymmetric carbons, double bonds and the like, and tautomers. Such isomers and mixtures thereof are included in the compound (I). Examples of the salt of the compound represented by the formula (I) include salts of alkali metals such as lithium, sodium and potassium; salts of alkaline earth metals such as calcium and magnesium; salts of transition metals such as iron and copper; ammonium salts; and salts of organic bases such as triethylamine, tributylamine, pyridine and hydrazine. The structure of the compound (1) can be determined by NMR spectra, IR spectra, MS spectra and the like.

The term "unsubstituted" used in the present specification means that it is composed only of a group which becomes a mother nucleus. When it is described only by the name of the group which becomes the mother nucleus without being described as "substituted", it means "unsubstituted" unless otherwise stated.

On the other hand, the term "substituted" means that any hydrogen atom of the group which is to become the mother nucleus is substituted with a group (substituent) having the same or different structure as that of the mother nucleus. Therefore, a "substituent" is another group bonded to a group which becomes a mother nucleus. The number of substituents may be one, or two or more. The two or more substituents may be the same or different.

The terms "$C_{1-6}$" and the like mean that the number of carbon atoms in the group which becomes a mother nucleus is 1 to 6, and so on. The number of carbon atoms does not include the number of carbon atoms present in the substituent. For example, a butyl group having an ethoxy group as a substituent is classified as a C2 alkoxy C4 alkyl group.

A "substituent" is not particularly limited as long as it is chemically acceptable and has the effects of the present invention. Hereinafter, groups which can be a "substituent" are exemplified.

A $C_{1-6}$ alkyl group such as a methyl group, an ethyl group, an n-propyl group, an i-propyl group, an n-butyl group, an s-butyl group, an i-butyl group, a t-butyl group, an n-pentyl group, and an n-hexyl group;

a $C_{2-6}$ alkenyl group such as a vinyl group, a 1-propenyl group, a 2-propenyl group (allyl group), a 1-butenyl group, a 2-butenyl group, a 3-butenyl group, a 1-methyl-2-propenyl group, and a 2-methyl-2-propenyl group;
a $C_{2-6}$ alkynyl group such as an ethynyl group, a 1 -propynyl group, a 2-propynyl group, a 1-butynyl group, a 2-butynyl group, a 3-butynyl group, and a 1-methyl-2-propynyl group;
a $C_{3-6}$ cycloalkyl group such as a cyclopropyl group, a cyclobutyl group, a cyclopentyl group and a cyclohexyl group;
a phenyl group and a naphthyl group;
a phenyl $C_{1-6}$ alkyl group such as a benzyl group and a phenethyl group;
a 3- to 6-membered heterocyclyl group;
a 3- to 6-membered heterocyclyl $C_{1-6}$ alkyl group;
a hydroxyl group;
a $C_{1-6}$ alkoxy group such as a methoxy group, an ethoxy group, an n-propoxy group, an i-propoxy group, an n-butoxy group, an s-butoxy group, an i-butoxy group, and a t-butoxy group;
a $C_{2-6}$ alkenyloxy group such as a vinyloxy group, an allyloxy group, a propenyloxy group and a butenyloxy group;
a $C_{2-6}$ alkynyloxy group such as an ethynyloxy group and a propargyloxy group;
a phenoxy group and a naphthoxy group;
a benzyloxy group and a phenethyloxy group;
a 5- to 6-membered heteroaryloxy group such as a thiazolyloxy group and a pyridyloxy group;
a 5- to 6-membered heteroaryl $C_{1-6}$ alkyloxy group such as a thiazolylmethyloxy group and a pyridylmethyloxy group;
a formyl group;
a $C_{1-6}$ alkylcarbonyl group such as an acetyl group and a propionyl group;
a formyloxy group;
a $C_{1-6}$ alkylcarbonyloxy group such as an acetyloxy group and a propionyloxy group;

a benzoyl group;
a $C_{1-6}$ alkoxycarbonyl group such as a methoxycarbonyl group, an ethoxycarbonyl group, an n-propoxycarbonyl group, an i-propoxycarbonyl group, an n-butoxycarbonyl group and a t-butoxycarbonyl group;
a $C_{1-6}$ alkoxycarbonyloxy group such as a methoxycarbonyloxy group, an ethoxycarbonyloxy group, an n-propoxycarbonyloxy group, an i-propoxycarbonyloxy group, an n-butoxycarbonyloxy group and a t-butoxycarbonyloxy group;
a carboxyl group;
a halogeno groups such as a fluoro group, a chloro group, a bromo group, and an iodo group;
a $C_{1-6}$ haloalkyl group such as a chloromethyl group, a chloroethyl group, a difluoromethyl group, a trifluoromethyl group, a 2,2,2-trifluoroethyl group, a 1,2-dichloro-n-propyl group and a 1-fluoro-n-butyl group;
a $C_{2-6}$ haloalkenyl group such as a 2-chloro-1-propenyl group and a 2-fluoro-1-butenyl group;
a $C_{2-6}$ haloalkynyl group such as a 4,4-dichloro-1-butynyl group, a 4-fluoro-1-pentynyl group and a 5-bromo-2-pentynyl group;
a $C_{1-6}$ haloalkoxy group such as a difluoromethoxy group, a trifluoromethoxy group, a 2,2,2-trifluoroethoxy group and a 2,3-dichlorobutoxy group;
a $C_{2-6}$ haloalkenyloxy group such as a 2-chloropropenyloxy group and a 3-bromobutenyloxy group;
a $C_{1-6}$ haloalkylcarbonyl group such as a chloroacetyl group, a trifluoroacetyl group and a trichloroacetyl group;
an amino group;
a $C_{1-6}$ alkyl-substituted amino group such as a methylamino group, a dimethylamino group and a diethylamino group;
an anilino group and a naphthylamino group;
a phenyl $C_{1-6}$ alkylamino group such as a benzylamino group and a phenethylamino group;
a formylamino group;
a $C_{1-6}$ alkylcarbonylamino group such as an acetylamino group, a propanoylamino group, a butyrylamino group and an i-propylcarbonylamino group;
a $C_{1-6}$ alkoxycarbonylamino group such as a methoxycarbonylamino group, an ethoxycarbonylamino group, an n-propoxycarbonylamino group and an i-propoxycarbonylamino group;
an unsubstituted or substituted aminocarbonyl group such as an aminocarbonyl group, a dimethylaminocarbonyl group, a phenylaminocarbonyl group and an N-phenyl-N-methylaminocarbonyl group;
an imino $C_{1-6}$ alkyl group such as an iminomethyl group, a (1-imino)ethyl group and a (1-imino)-n-propyl group;
a substituted or unsubstituted N-hydroxyimino $C_{1-6}$ alkyl group such as an N-hydroxy-iminomethyl group, a (1-(N-hydroxy)-imino)ethyl group, a (1-(N-hydroxy)-imino)propyl group, an N-methoxy-iminomethyl group, and a (1-(N-methoxy)-imino)ethyl group;
an aminocarbonyloxy group;
a $C_{1-6}$ alkyl-substituted aminocarbonyloxy group such as an ethylaminocarbonyloxy group and a dimethylaminocarbonyloxy group;
a mercapto group;
a $C_{1-6}$ alkylthio group such as a methylthio group, an ethylthio group, an n-propylthio group, an i-propylthio group, an n-butylthio group, an i-butylthio group, an s-butylthio group and a t-butylthio group;
a $C_{1-6}$ haloalkylthio group such as a trifluoromethylthio group and a 2,2,2-trifluoroethylthio group;
a phenylthio group;
a 5- to 6-membered heteroarylthio group such as a thiazolylthio group and a pyridylthio group;
a $C_{1-6}$ alkylsulfinyl group such as a methylsulfinyl group, an ethylsulfinyl group and a t-butylsulfinyl group;
a $C_{1-6}$ haloalkylsulfinyl group such as a trifluoromethylsulfinyl group and a 2,2,2-trifluoroethylsulfinyl group;
a phenylsulfinyl group;
a 5- to 6-membered heteroarylsulfinyl group such as a thiazolylsulfinyl group and a pyridylsulfinyl group;
a $C_{1-6}$ alkylsulfonyl group such as a methylsulfonyl group, an ethylsulfonyl group and a t-butylsulfonyl group;
a $C_{1-6}$ haloalkylsulfonyl group such as a trifluoromethylsulfonyl group and a 2,2,2-trifluoroethylsulfonyl group;
a phenylsulfonyl group;
a 5- to 6-membered heteroarylsulfonyl group such as a thiazolylsulfonyl group and a pyridylsulfonyl group;
a $C_{1-6}$ alkylsulfonyloxy group such as a methylsulfonyloxy group, an ethylsulfonyloxy group and a t-butylsulfonyloxy group;
a $C_{1-6}$ haloalkylsulfonyloxy group such as a trifluoromethylsulfonyloxy group and a 2,2,2-trifluoroethylsulfonyloxy group;
a tri $C_{1-6}$ alkyl-substituted silyl group such as a trimethylsilyl group, a triethylsilyl group and a t-butyldimethylsilyl group;
a triphenylsilyl group;
a pentafluorosulfanyl group;
a cyano group; and a nitro group.

Further, in these "substituents", any hydrogen atom in the substituent may be substituted with a group having a different structure. Examples of the "substituent" in this case include a $C_{1-6}$ alkyl group, a $C_{1-6}$ haloalkyl group, a $C_{1-6}$ alkoxy group, a $C_{1-6}$ haloalkoxy group, a halogeno group, a cyano group and a nitro group.

Further, the above-mentioned "3- to 6-membered heterocyclyl group" is a 3-membered ring, 4-membered ring, 5-membered ring or 6-membered ring group containing 1 to 4 hetero atoms selected from the group consisting of a nitrogen atom, an oxygen atom and a sulfur atom as constituent atoms of the ring. The heterocyclyl group may be either monocyclic or polycyclic. As long as the polycyclic heterocyclyl group includes at least one heterocyclic ring, the remaining ring may be any of a saturated alicyclic ring, an unsaturated alicyclic ring or an aromatic ring. Examples of the "3- to 6-membered heterocyclyl group" include a 3- to 6-membered saturated heterocyclyl group, a 5- to 6-membered unsaturated heterocyclyl group and a 5- to 6-membered heteroaryl group.

Examples of the 3- to 6-membered saturated heterocyclyl group include an aziridinyl group, an epoxy group, an azetidinyl group, a pyrrolidinyl group, a tetrahydrofuranyl group, a dioxolanyl group, a tetrahydropyranyl group, a piperidyl group, a piperazinyl group, a morpholinyl group and a dioxanyl group.

Examples of the 5- to 6-membered unsaturated heterocyclyl group include a pyrrolinyl group, a dihydrofuranyl group, an imidazolinyl group, a pyrazolinyl group, an oxazolinyl group, an isoxazolinyl group, a thiazolinyl group, an isothiazolinyl group, a dihydropyranyl group and a dihydrooxadinyl group.

Examples of the 5-membered heteroaryl group include a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group and a tetrazolyl group.

Examples of the 6-membered heteroaryl group include a pyridyl group, a pyrazinyl group, a pyrimidinyl group, a pyridazinyl group and a triazinyl group.

[$R^1$]

In the formula (I), $R^1$ represents a substituted or unsubstituted $C_{1-6}$ alkyl group, a substituted or unsubstituted $C_{2-6}$ alkenyl group, a substituted or unsubstituted $C_{2-6}$ alkynyl group, a substituted or unsubstituted $C_{3-6}$ cycloalkyl group, or a 5- to 6-membered cyclic ether group.

The "$C_{1-6}$ alkyl group" represented by $R^1$ may be linear or branched. Examples of the "$C_{1-6}$ alkyl group" represented by $R^1$ include a methyl group, an ethyl group, an n-propyl group, an n-butyl group, an n-pentyl group, an n-hexyl group, an i-propyl group, an i-butyl group an s-butyl group, a t-butyl group, an i-pentyl group, a neopentyl group, a 2-methylbutyl group and an i-hexyl group.

Examples of the "$C_{2-6}$ alkenyl group" represented by $R^1$ include a vinyl group, a 1-propenyl group, a 2-propenyl group, a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group and a 5-hexenyl group.

Examples of the "$C_{2-6}$ alkynyl group" represented by $R^1$ include an ethynyl group, a 1-propynyl group, a 2-propynyl group, a 1-butynyl group, a 2-butynyl group, a 3-butynyl group, a l-methyl-2-propynyl group, a 2-methyl-3-butynyl group, a 1-pentynyl group, a 2-pentynyl group, a 3-pentynyl group, a 4-pentynyl group, a 1-methyl-2-butynyl group, a 2-methyl-3-pentynyl group, a 1-hexynyl group and a 1,1-dimethyl-2-butynyl group.

The substituent on the "$C_{1-6}$ alkyl group", "$C_{2-6}$ alkenyl group", or "$C_{2-6}$ alkynyl group" represented by $R^1$ is preferably a halogeno group such as a fluoro group, a chloro group, a bromo group and an iodo group; a hydroxyl group; a $C_{1-6}$ alkoxy group such as a methoxy group, an ethoxy group, an n-propoxy group, an i-propoxy group, an n-butoxy group, an s-butoxy group, an i-butoxy group and a t-butoxy group; a $C_{1-6}$ haloalkoxy group such as a 2,3-dichlorobutoxy group, a trifluoromethoxy group and a 2,2,2-trifluoroethoxy group; a $C_{1-6}$ alkylthio group such as a methylthio group, an ethylthio group, an n-propylthio group, an i-propylthio group, an n-butylthio group, an i-butylthio group, an s-butylthio group and a t-butylthio group; a $C_{1-6}$ alkylsulfinyl group such as a methylsulfinyl group, an ethylsulfinyl group and a t-butylsulfinyl group; a $C_{1-6}$ alkylsulfonyl group such as a methylsulfonyl group, an ethylsulfonyl group and a t-butylsulfonyl group; a $C_{3-6}$ cycloalkyl group such as a cyclopropyl group, a cyclobutyl group, a cyclopentyl group and a cyclohexyl group; a phenyl group; a $C_{1-6}$ alkyl group substituted, halogeno group substituted, $C_{1-6}$ haloalkyl group substituted or $C_{1-6}$ haloalkoxy group substituted phenyl group such as a 4-methylphenyl group, a 4-chlorophenyl group, a 4-trifluoromethylphenyl group and a 4-trifluoromethoxyphenyl group; or a cyano group.

Examples of the "$C_{3-6}$ cycloalkyl group" represented by $R^1$ include a cyclopropyl group, a cyclobutyl group, a cyclopentyl group and a cyclohexyl group.

Examples of the "5- to 6-membered cyclic ether group" represented by $R^1$ include a tetrahydrofuranyl group and a tetrahydropyranyl group.

The substituent on the "$C_{3-6}$ cycloalkyl group" represented by $R^1$ is preferably a halogeno group such as a fluoro group, a chloro group, a bromo group and an iodo group; a $C_{1-6}$ alkyl group such as a methyl group, an ethyl

group, an n-propyl group, an i-propyl group, an n-butyl group, an s-butyl group, an i-butyl group, a t-butyl group, an n-pentyl group and an n-hexyl group; a $C_{1-6}$ haloalkyl group such as a difluoromethyl group, a trifluoromethyl group, a 1,2-dichloro-n-propyl group and a 1-fluoro-n-butyl group; a hydroxyl group; a $C_{1-6}$ alkoxy group such as a methoxy group, an ethoxy group, an n-propoxy group, an i-propoxy group, an n-butoxy group, an s-butoxy group, an i-butoxy group and a t-butoxy group; a $C_{1-6}$ haloalkoxy group such as a 2,3-dichlorobutoxy group, a trifluoromethoxy group and a 2,2,2-trifluoroethoxy group; or a cyano group.

In the present invention, $R^1$ is preferably a substituted or unsubstituted $C_{1-6}$ alkyl group or a 5- to 6-membered cyclic ether group.

The substituent on the "$C_{1-6}$ alkyl group" represented by $R^1$ is preferably a halogeno group, a $C_{1-6}$ alkoxy group, a $C_{1-6}$ haloalkoxy group, a $C_{1-6}$ alkylthio group, a $C_{1-6}$ alkylsulfinyl group, a $C_{1-6}$ alkylsulfonyl group or a $C_{3-6}$ cycloalkyl group.

[$R^2$]

In the formula (1), $R^2$ represents a substituted or unsubstituted $C_{1-6}$ alkyl group, a substituted or unsubstituted $C_{2-6}$ alkenyl group, or a substituted or unsubstituted $C_{2-6}$ alkynyl group.

Specific examples of the "unsubstituted $C_{1-6}$ alkyl group", "substituted or unsubstituted $C_{2-6}$ alkenyl group", or "substituted or unsubstituted $C_{2-6}$ alkynyl group" represented by $R^2$ include the same as those exemplified for $R^1$.

The substituent on the "$C_{1-6}$ alkyl group" represented by $R^2$ is preferably a halogeno group such as a fluoro group, a chloro group, a bromo group and an iodo group; a $C_{1-6}$ alkoxy group such as a methoxy group, an ethoxy group, an n-propoxy group, an i-propoxy group, an n-butoxy group, an s-butoxy group, an i-butoxy group and a t-butoxy group; a $C_{1-6}$ alkoxy $C_{1-6}$ alkoxy group such as a methoxyethoxy group; a $C_{1-6}$ haloalkoxy group such as a 2,3-dichlorobutoxy group, a trifluoromethoxy group and a 2,2,2-trifluoroethoxy group; a $C_{1-6}$ alkylthio group such as a methylthio group, an ethylthio group, an n-propylthio group, an i-propylthio group, an n-butylthio group, an i-butylthio group, an s-butylthio group and a t-butylthio group; a $C_{1-6}$ alkylsulfinyl group such as a methylsulfinyl group, an ethylsulfinyl group and a t-butylsulfinyl group; a $C_{1-6}$ alkylsulfonyl group such as a methylsulfonyl group, an ethylsulfonyl group and a t-butylsulfonyl group; a $C_{3-6}$ cycloalkyl group such as a cyclopropyl group, a cyclobutyl group, a cyclopentyl group and a cyclohexyl group; a phenyl group; a $C_{1-6}$ alkyl group substituted, halogeno group substituted, $C_{1-6}$ haloalkyl group substituted or $C_{1-6}$ haloalkoxy group substituted phenyl group such as a 4-methylphenyl group, a 4-chlorophenyl group, a 4-trifluoromethylphenyl group and a 4-trifluoromethoxyphenyl group; a $C_{1-6}$ alkyl group substituted, halogeno group substituted, $C_{1-6}$ haloalkyl group substituted or $C_{1-6}$ haloalkoxy group substituted phenoxy group; a 5-membered heteroaryl group; a $C_{1-6}$ alkyl group substituted, halogeno group substituted, $C_{1-6}$ haloalkyl group substituted or $C_{1-6}$ haloalkoxy group substituted 5-membered heteroaryl group; a $C_{1-6}$ alkylcarbonyl group such as an acetyl group; a benzoyl group; a $C_{1-6}$ alkoxycarbonyl group such as a methoxycarbonyl group; a $C_{1-6}$ alkylcarboxamide group such as an acetamide group; a (1,3-dioxoisoindolin-2-yl)oxy group, a trimethylsilyl group or a cyano group.

The "5-membered heteroaryl group" mentioned as one of the substituents on the "$C_{1-6}$ alkyl group" represented by $R^2$ is a group of a 5-membered aromatic ring containing 1 to 4 hetero atoms selected from the group consisting of a nitrogen atom, an oxygen atom and a sulfur atom as constituent atoms of the ring.

Examples of the 5-membered heteroaryl group include a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group and a tetrazolyl group.

[R3]

In the formula (I), $R^3$ represents a hydrogen atom, a substituted or unsubstituted $C_{1-6}$ alkyl group, a substituted or unsubstituted $C_{2-6}$ alkenyl group, a substituted or unsubstituted $C_{2-6}$ alkynyl group, a substituted or unsubstituted $C_{1-6}$ alkoxy group, a substituted or unsubstituted $C_{3-6}$ cycloalkyl group or a substituted or unsubstituted phenyl group.

Specific examples of these groups represented by $R^3$ include the same as those exemplified for $R^1$.

Examples of the "$C_{1-6}$ alkoxy group" represented by $R^3$ include a methoxy group, an ethoxy group, an n-propoxy group, an n-butoxy group, an n-pentyloxy group, an n-hexyloxy group, an i-propoxy group, an i-butoxy group, an s-butoxy group, a t-butoxy group and an i-hexyloxy group.

The substituent on the "$C_{1-6}$ alkoxy group" represented by $R^3$ is preferably a halogeno group such as a fluoro group, a chloro group, a bromo group and an iodo group; a hydroxyl group; a $C_{1-6}$ alkoxy group such as a methoxy group, an ethoxy group, an n-propoxy group, an i-propoxy group, an n-butoxy group, an s-butoxy group, an i-butoxy group and a t-butoxy group; a $C_{1-6}$ haloalkoxy group such as a 2,3-dichlorobutoxy group, a trifluoromethoxy group and a 2,2,2-trifluoroethoxy group; a $C_{1-6}$ alkylthio group such as a methylthio group, an ethylthio group, an n-propylthio group, an i-propylthio group, an n-butylthio group, an i-butylthio group, an s-butylthio group and a t-butylthio group; a $C_{1-6}$ alkylsulfinyl group such as a methylsulfinyl group, an ethylsulfinyl group and a t-butylsulfinyl group; a $C_{1-6}$ alkylsulfonyl

group such as a methylsulfonyl group, an ethylsulfonyl group and a t-butylsulfonyl group; a $C_{3-6}$ cycloalkyl group such as a cyclopropyl group, a cyclobutyl group, a cyclopentyl group and a cyclohexyl group; a phenyl group; a $C_{1-6}$ alkyl group substituted, halogeno group substituted, $C_{1-6}$ haloalkyl group substituted or $C_{1-6}$ haloalkoxy group substituted phenyl group such as a 4-methylphenyl group, a 4-chlorophenyl group, a 4-trifluoromethylphenyl group and a 4-trifluoromethoxyphenyl group; or a cyano group.

The substituent on the "phenyl group" represented by $R^3$ is preferably a halogeno group such as a fluoro group, a chloro group, a bromo group and an iodo group; a $C_{1-6}$ alkyl group such as a methyl group, an ethyl group, an n-propyl group, an i-propyl group, an n-butyl group, an s-butyl group, an i-butyl group, a t-butyl group, an n-pentyl group and an n-hexyl group; a $C_{1-6}$ haloalkyl group such as a difluoromethyl group, a trifluoromethyl group, a 1,2-dichloro-n-propyl group and a 1-fluoro-n-butyl group; a hydroxyl group; a $C_{1-6}$ alkoxy group such as a methoxy group, an ethoxy group, an n-propoxy group, an i-propoxy group, an n-butoxy group, an s-butoxy group, an i-butoxy group and a t-butoxy group; a $C_{1-6}$ haloalkoxy group such as a 2,3-dichlorobutoxy group, a trifluoromethoxy group and a 2,2,2-trifluoroethoxy group; or a cyano group.

In the present invention, $R^3$ is preferably a hydrogen atom, a substituted or unsubstituted $C_{1-6}$ alkyl group, a substituted or unsubstituted $C_{2-6}$ alkenyl group, a substituted or unsubstituted $C_{2-6}$ alkynyl group, or a substituted or unsubstituted $C_{3-6}$ cycloalkyl group.

The substituent on the "$C_{1-6}$ alkyl group", "$C_{2-6}$ alkenyl group", or "$C_{2-6}$ alkynyl group" represented by $R^3$ is preferably a halogeno group. The substituent on the "$C_{3-6}$ cycloalkyl group" is preferably a halogeno group or a $C_{1-6}$ alkyl group.

[Q]

In the formula (I), Q represents a substituted or unsubstituted phenyl group or a substituted or unsubstituted naphthyl group.

The substituent on the "phenyl group" or "naphthyl group" represented by Q (sometimes referred to as substituent (X)) is at least one selected from the group consisting of a halogeno group, a substituted or unsubstituted $C_{1-6}$ alkyl group, a substituted or unsubstituted $C_{2-6}$ alkenyl group, a substituted or unsubstituted $C_{2-6}$ alkynyl group, a hydroxyl group, a substituted or unsubstituted $C_{1-6}$ alkoxy group, a substituted or unsubstituted $C_{2-6}$ alkenyloxy group, a substituted or unsubstituted $C_{2-6}$ alkynyloxy group, a substituted or unsubstituted $C_{1-6}$ alkylthio group, a substituted or unsubstituted $C_{1-6}$ alkylsulfinyl group, a substituted or unsubstituted $C_{1-6}$ alkylsulfonyl group, a substituted or unsubstituted $C_{3-6}$ cycloalkyl group, a substituted or unsubstituted $C_{3-6}$ cycloalkyloxy group, a substituted or unsubstituted phenyl group, a phenoxy group, a substituted or unsubstituted 5- to 6-membered heterocyclyl group, a substituted or unsubstituted 5- to 6-membered heterocyclyloxy group, a substituted or unsubstituted phenylsulfonyl group, a group represented by R-CO-, a group represented by RO-CO-, a group represented by R-CONR$^a$-, a group represented by RNH-CO-, a group represented by $R_2N$-CO-, a group represented by RO-CO-NR$^a$-, a group represented by RNH-CO-NH-, a group represented by $R_2N$-CO-NH-, a group represented by RNH-CO-CO-NH-, a group represented by $R_2N$-CO-CO-NH-, a group represented by R-$S(O)_2$-NH-, a group represented by $R_2N$-$S(O)_2$-, a group represented by $R_2S(O)$=N-, a group represented by R-S(O)(=N-R$^b$)-, a group represented by RO-N=C(R$^c$)-, a nitro group and a cyano group.

Here, each R independently represents a substituted or unsubstituted $C_{1-6}$ alkyl group or a substituted or unsubstituted $C_{3-6}$ cycloalkyl group.

Each $R^a$ independently represents a hydrogen atom, a substituted or unsubstituted $C_{1-6}$ alkyl group, or a substituted or unsubstituted $C_{1-6}$ alkoxy group.

$R^b$ represents a substituted or unsubstituted $C_{1-6}$ alkyl group or a substituted or unsubstituted phenyl group.

$R^c$ represents a hydrogen atom or a substituted or unsubstituted $C_{1-6}$ alkyl group.

Further, in the above-mentioned group represented by $R_2N$-CO-, the group represented by $R_2N$-CO-NH-, the group represented by $R_2N$-CO-CO-NH-, or the group represented by $R_2N$-$S(O)_2$-, R and R may be bonded to form a 4- to 6-membered ring together with a nitrogen atom to which they are bonded.

Moreover, in the above group represented by $R_2S(O)$=N-, R and R may be bonded to form a 5- to 6-membered ring together with a sulfur atom to which they are bonded.

When there are two or more substituents (X) of the "phenyl group" or "naphthyl group" represented by Q, two of these may be combined to form a divalent organic group.

[X]

X represents a halogeno group, a substituted or unsubstituted $C_{1-6}$ alkyl group, a substituted or unsubstituted $C_{2-6}$ alkenyl group, a substituted or unsubstituted $C_{2-6}$ alkynyl group, a hydroxyl group, a substituted or unsubstituted $C_{1-6}$ alkoxy group, a substituted or unsubstituted $C_{2-6}$ alkenyloxy group, a substituted or unsubstituted $C_{2-6}$ alkynyloxy group, a substituted or unsubstituted $C_{1-6}$ alkylthio group, a substituted or unsubstituted $C_{1-6}$ alkylsulfinyl group, a

substituted or unsubstituted $C_{1-6}$ alkylsulfonyl group, a substituted or unsubstituted $C_{3-6}$ cycloalkyl group, a substituted or unsubstituted $C_{3-6}$ cycloalkyloxy group, a substituted or unsubstituted phenyl group, a phenoxy group, a substituted or unsubstituted 5- to 6-membered heterocyclyl group, a substituted or unsubstituted 5- to 6-membered heterocyclyloxy group, a substituted or unsubstituted phenylsulfonyl group, a group represented by R-CO-, a group represented by RO-CO-, a group represented by R-CONR$^a$-, a group represented by RNH-CO-, a group represented by $R_2$N-CO-, a group represented by RO-CO-NR$^a$-, a group represented by RNH-CO-NH-, a group represented by $R_2$N-CO-NH-, a group represented by RNH-CO-CO-NH-, a group represented by $R_2$N-CO-CO-NH-, a group represented by R-S(O)$_2$-NH-, a group represented by $R_2$N-S(O)$_2$-, a group represented by $R_2$S(O)=N-, a group represented by R-S(O)(=N-R$^b$)-, a group represented by RO-N=C(R$^c$)-, a nitro group or a cyano group.

Examples of the "halogeno group" represented by X include a fluoro group, a chloro group, a bromo group and an iodo group.

The "$C_{1-6}$ alkyl group" represented by X may be linear or branched. Examples of the "$C_{1-6}$ alkyl group" represented by X include a methyl group, an ethyl group, an n-propyl group, an n-butyl group, an n-pentyl group, an n-hexyl group, an i-propyl group, an i-butyl group, an s-butyl group, a t-butyl group, an i-pentyl group, a neopentyl group, a 2-methylbutyl group and an i-hexyl group.

Examples of the "$C_{2-6}$ alkenyl group" represented by X include a vinyl group, a 1-propenyl group, a 2-propenyl group, a 1-butenyl group, a 2-butenyl group, a 3-butenyl group, a l-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group and a 5-hexenyl group.

Examples of the "$C_{2-6}$ alkynyl group" represented by X include an ethynyl group, a 1-propynyl group, a 2-propynyl group, a 1-butynyl group, a 2-butynyl group, a 3-butynyl group, a 1-methyl-2-propynyl group, a 2-methyl-3-butynyl group, a 1-pentynyl group, a 2-pentynyl group, a 3-pentynyl group, a 4-pentynyl group, a 1-methyl-2-butynyl group, a 2-methyl-3-pentynyl group, a 1-hexynyl group and a 1,1-dimethyl-2-butynyl group.

Examples of the "$C_{1-6}$ alkoxy group" represented by X include a methoxy group, an ethoxy group, an n-propoxy group, an n-butoxy group, an n-pentyloxy group, an n-hexyloxy group, an i-propoxy group, an i-butoxy group, an s-butoxy group, a t-butoxy group and an i-hexyloxy group.

Examples of the "$C_{2-6}$ alkenyloxy group" represented by X include a vinyloxy group, an allyloxy group, a propenyloxy group and a butenyloxy group.

Examples of the "$C_{2-6}$ alkynyloxy group" represented by X include an ethynyloxy group and a propargyloxy group.

Examples of the "$C_{1-6}$ alkylthio group" represented by X include a methylthio group, an ethylthio group, an n-propylthio group, an n-butylthio group, an n-pentylthio group, an n-hexylthio group and an i-propylthio group.

Examples of the "$C_{1-6}$ alkylsulfinyl group" represented by X include a methylsulfinyl group, an ethylsulfinyl group and a t-butylsulfinyl group.

Examples of the "$C_{1-6}$ alkylsulfonyl group" represented by X include a methylsulfonyl group, an ethylsulfonyl group and a t-butylsulfonyl group.

The substituent on the "$C_{1-6}$ alkyl group" or "$C_{1-6}$ alkoxy group" represented by X is preferably a halogeno group such as a fluoro group, a chloro group, a bromo group and an iodo group; a hydroxyl group; a $C_{1-6}$ alkoxy group such as a methoxy group, an ethoxy group, an n-propoxy group, an i-propoxy group, an n-butoxy group, an s-butoxy group, an i-butoxy group and a t-butoxy group; a $C_{1-6}$ alkoxy $C_{1-6}$ alkoxy group such as a methoxyethoxy group; a $C_{3-6}$ cycloalkyl $C_{1-6}$ alkoxy group such as a cyclopropylmethoxy group; a $C_{1-6}$ haloalkoxy group such as a 2,3-dichlorobutoxy group, a trifluoromethoxy group, a 2,2,2-trifluoroethoxy group and a 3,3,3-trifluoropropoxy group; a $C_{1-6}$ alkylthio group such as a methylthio group, an ethylthio group, an n-propylthio group, an i-propylthio group, an n-butylthio group, an i-butylthio group, an s-butylthio group and a t-butylthio group; a $C_{1-6}$ alkylsulfinyl group such as a methylsulfinyl group, an ethylsulfinyl group and a t-butylsulfinyl group; a $C_{1-6}$ alkylsulfonyl group such as a methylsulfonyl group, an ethylsulfonyl group and a t-butylsulfonyl group; a $C_{3-6}$ cycloalkyl group such as a cyclopropyl group, a cyclobutyl group, a cyclopentyl group and a cyclohexyl group; a phenyl group; a $C_{1-6}$ alkyl group substituted, halogeno group substituted, $C_{1-6}$ haloalkyl group substituted or $C_{1-6}$ haloalkoxy group substituted phenyl group such as a 4-methylphenyl group, a 4-chlorophenyl group, a 4-trifluoromethylphenyl group and a 4-trifluoromethoxyphenyl group; a morpholinyl group; a 5-membered heteroaryl group such as a triazolyl group; a $C_{1-6}$ alkyl group substituted, halogeno group substituted, $C_{1-6}$ haloalkyl group substituted or $C_{1-6}$ haloalkoxy group substituted 5-membered heteroaryl group; a $C_{1-6}$ alkyl group substituted aminocarbonyl group such as a methylaminocarbonyl group and a dimethylaminocarbonyl group; a (propan-2-ylidenamide)oxy group; or a cyano group.

The substituent on the "$C_{2-6}$ alkenyl group", "$C_{2-6}$ alkynyl group", "$C_{2-6}$ alkynyloxy group", "$C_{1-6}$ alkylthio group", "$C_{1-6}$ alkylsulfinyl group", or "$C_{1-6}$ alkylsulfonyl group" represented by X is preferably a halogeno group such as a fluoro group, a chloro group, a bromo group and an iodo group; a hydroxyl group; a $C_{1-6}$ alkoxy group such as a methoxy group, an ethoxy group, an n-propoxy group, an i-propoxy group, an n-butoxy group, an s-butoxy group, an i-butoxy group and a t-butoxy group; a $C_{1-6}$ haloalkoxy group such as a 2,3-dichlorobutoxy group, a trifluoromethoxy group and

a 2,2,2-trifluoroethoxy group; a $C_{1-6}$ alkylsulfonyl group such as a methylsulfonyl group, an ethylsulfonyl group and a t-butylsulfonyl group; a $C_{3-6}$ cycloalkyl group such as a cyclopropyl group, a cyclobutyl group, a cyclopentyl group and a cyclohexyl group; a phenyl group; a $C_{1-6}$ alkyl group substituted, halogeno group substituted, $C_{1-6}$ haloalkyl group substituted or $C_{1-6}$ haloalkoxy group substituted phenyl group such as a 4-methylphenyl group, a 4-chlorophenyl group, a 4-trifluoromethylphenyl group and a 4-trifluoromethoxyphenyl group; or a cyano group.

Examples of the "$C_{3-6}$ cycloalkyl group" represented by X include a cyclopropyl group, a cyclobutyl group, a cyclopentyl group and a cyclohexyl group.

Examples of the "$C_{3-6}$ cycloalkyloxy group" represented by X include a cyclopropyloxy group, a cyclobutyloxy group, a cyclopentyloxy group and a cyclohexyloxy group.

The "5- to 6-membered heterocyclyl group" represented by X is a 5-membered ring or 6-membered ring group containing 1, 2, 3 or 4 hetero atoms selected from the group consisting of a nitrogen atom, an oxygen atom and a sulfur atom as constituent atoms of the ring. When there are two or more hetero atoms, they may be the same or different. Examples of the "5- to 6-membered heterocyclyl group" include a 5- to 6-membered saturated heterocyclyl group, a 5- to 6-membered unsaturated heterocyclyl group and a 5- to 6-membered heteroaryl group.

Examples of the 5- to 6-membered saturated heterocyclyl group include a pyrrolidinyl group, a tetrahydrofuranyl group, a dioxolanyl group, a tetrahydropyranyl group, a piperidyl group, a piperazinyl group, a morpholinyl group and a dioxanyl group.

Examples of the 5- to 6-membered unsaturated heterocyclyl group include a pyrrolinyl group, a dihydrofuranyl group, an imidazolinyl group, a pyrazolinyl group, an oxazolinyl group, an isoxazolinyl group, a thiazolinyl group, an isothiazolinyl group, a dihydropyranyl group and a dihydrooxadinyl group.

Examples of the 5-membered heteroaryl group include a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group and a tetrazolyl group.

Examples of the 6-membered heteroaryl group include a pyridyl group, a pyrazinyl group, a pyrimidinyl group, a pyridazinyl group and a triazinyl group.

The "5- to 6-membered heterocyclyloxy group" represented by X has a structure in which a 5- to 6-membered heterocyclyl group and an oxy group are bonded. Specific examples thereof include a thiazolyloxy group and a pyridyloxy group.

The substituent on the "$C_{3-6}$ cycloalkyl group", "$C_{3-6}$ cycloalkyloxy group", "phenyl group", "phenoxy group", "5- to 6-membered heterocyclyl group", "5- to 6-membered heterocyclyloxy group" or "phenylsulfonyl group" represented by X is preferably a halogeno group such as a fluoro group, a chloro group, a bromo group and an iodo group; a $C_{1-6}$ alkyl group such as a methyl group, an ethyl group, an n-propyl group, an i-propyl group, an n-butyl group, an s-butyl group, an i-butyl group, a t-butyl group, an n-pentyl group and an n-hexyl group; a $C_{1-6}$ haloalkyl group such as a difluoromethyl group, a trifluoromethyl group, a 1,2-dichloro-n-propyl group and a 1-fluoro-n-butyl group; a hydroxyl group; a $C_{1-6}$ alkoxy group such as a methoxy group, an ethoxy group, an n-propoxy group, an i-propoxy group, an n-butoxy group, an s-butoxy group, an i-butoxy group and a t-butoxy group; a $C_{1-6}$ haloalkoxy group such as a 2,3-dichlorobutoxy group, a trifluoromethoxy group and a 2,2,2-trifluoroethoxy group; an oxo group; or a cyano group.

Specific examples of these groups represented by R, $R^a$, $R^b$ or $R^c$ include the same as those exemplified for Q.

Examples of the "group represented by R-CO-" represented by X include an acetyl group and a cyclopropylcarbonyl group.

Examples of the "group represented by RO-CO-" represented by X include a methoxycarbonyl group.

Examples of the "group represented by R-CONR$^a$-" represented by X include an acetamide group and a cyclopropanecarboxamide group.

Examples of the "group represented by RNH-CO-" represented by X include a methylaminocarbonyl group.

Examples of the "group represented by $R_2$N-CO-" represented by X include a dimethylaminocarbonyl group.

Here, R and R may be bonded with each other to form a 4- to 6-membered ring together with a nitrogen atom to which they are bonded, and examples of the 4- to 6-membered ring to be formed include an azetidine ring, a pyrrolidine ring, a piperidine group, a piperazine ring and a morpholine ring.

Examples of the "group represented by $R_2$N-CO-" after forming a 4- to 6-membered ring include an azetidine-1-carbonyl group, a pyrrolidine-1-carbonyl group and a morpholine-4-carbonyl group.

Examples of the "group represented by RO-CO-NR$^a$-" represented by X include a (t-butoxycarbonyl) amino group and a methoxy (t-butoxycarbonyl) amino group.

Examples of the "group represented by RNH-CO-NH-" represented by X include a methylaminocarboxamide group.

Examples of the "group represented by $R_2$N-CO-NH-" represented by X include a dimethylaminocarboxamide group.

Here, R and R may be bonded with each other to form a 4- to 6-membered ring together with a nitrogen atom to which they are bonded, and specific examples of the 4-to 6-membered ring to be formed include the same as those

exemplified above for the "group represented by $R_2N$-CO-".

Examples of the "group represented by $R_2N$-CO-NH-" after forming a 4- to 6-membered ring include an azetidine-1-carboxamide group, a pyrrolidine-1-carboxamide group and a morpholine-4-carboxamide group.

Examples of the "group represented by RNH-CO-CO-NH-" represented by X include a methylaminocarbonylcarboxamide group.

Examples of the "group represented by $R_2N$-CO-CO-NH-" represented by X include a dimethylaminocarbonylcarboxamide group.

Here, R and R may be bonded with each other to form a 4- to 6-membered ring together with a nitrogen atom to which they are bonded, and specific examples of the 4-to 6-membered ring to be formed include the same as those exemplified above for the "group represented by $R_2N$-CO-".

Examples of the "group represented by $R_2N$-CO-NH-" after forming a 4- to 6-membered ring include an azetidine-1-carbonylcarboxamide group, a pyrrolidine-1-carbonylcarboxamide group and a morpholine-4-carbonylcarboxamide.

Examples of the "group represented by R-$S(O)_2$-NH-" represented by X include a methylsulfonamide group.

Examples of the "group represented by $R_2N$-$S(O)_2$-" represented by X include a dimethylaminosulfonyl group.

Here, R and R may be bonded with each other to form a 4- to 6-membered ring together with a nitrogen atom to which they are bonded, and specific examples of the 4-to 6-membered ring to be formed include the same as those exemplified above for the "group represented by $R_2N$-CO-".

Examples of the "group represented by $R_2N$-$S(O)_2$-" after forming a 4- to 6-membered ring include an azetidine-1-sulfonyl group, a pyrrolidine-1-sulfonyl group and a morpholinosulfonyl group.

Examples of the "group represented by $R_2S(O)$=N-" represented by X include a (dimethyloxide-λ4-sulfanylidene) amino group ($Me_2S(O)$=N-).

Here, R and R may be bonded with each other to form a 5- to 6-membered ring together with a sulfur atom to which they are bonded, and examples of the 5- to 6-membered ring to be formed include a tetrahydrothiophene ring and a tetrahydro-2H-thiopyran ring.

Examples of the "group represented by $R_2S(O)$=N-" after forming a 5- to 6-membered ring include a (tetrahydro-1-oxide-2H-thiopyran-1-ylidene) amino group.

Examples of the "group represented by R-S(O)(=N-$R^b$)-" represented by X include an S-methyl-N-methylsulfonimideyl group and an S-methyl-N-(p-chlorophenyl) sulfonimideyl group.

Examples of the "group represented by RO-N=C($R^c$)-" represented by X include a (methoxyimino) methyl group and a 1-(methoxyimino) ethyl group.

A "divalent organic group that two X groups may form together" is a substituted or unsubstituted saturated divalent hydrocarbon group having 1 to 4 carbon atoms; or a divalent group formed by bonding a group containing one or more hetero atoms selected from the group consisting of O, N and S, and a substituted or unsubstituted saturated divalent hydrocarbon group having 1 to 4 carbon atoms.

Furthermore, the divalent organic group that two X groups may form together is a substituted or unsubstituted unsaturated divalent hydrocarbon group having 2 to 3 carbon atoms; or a divalent group formed by bonding a group containing one or more hetero atoms selected from the group consisting of O, N and S, and a substituted or unsubstituted unsaturated divalent hydrocarbon group having 2 to 3 carbon atoms.

Examples of the saturated divalent hydrocarbon group having 1 to 4 carbon atoms include a "$C_{1-4}$ alkylene group" such as a methylene group, a dimethylene group, a trimethylene group and a tetramethylene group.

Examples of the unsaturated divalent hydrocarbon group having 2 to 3 carbon atoms include a "$C_{2-3}$ alkenylene group" such as a vinylene group (-CH=CH-) and a propenylene group (-CH=CH-$CH_2$-, -$CH_2$-CH=CH-).

The substituent on the "saturated or unsaturated divalent hydrocarbon group" is preferably a halogen group, a $C_{1-6}$ alkyl group or a $C_{1-6}$ haloalkyl group.

Examples of the group containing an oxygen atom (O) include an oxy (-O-) group, a carbonyl (-C(O)-) group and a carboxy (-COO-) group.

Examples of the divalent group formed by bonding a group containing an oxygen atom (O) and a saturated divalent hydrocarbon group include an "oxy $C_{2-3}$ alkylene group" such as an oxydimethylene group (-O-$CH_2CH_2$-), a "$C_{2-3}$ alkyleneoxy group" such as a dimethyleneoxy group (-$CH_2CH_2$-O-), an "oxy$C_{1-2}$ alkyleneoxy group" such as an oxymethyleneoxy group (-O-$CH_2$-O-), and a "$C_{1-2}$ alkyleneoxy C1-C2 alkylene group" such as a methyleneoxy methylene group (-$CH_2$-O-$CH_2$-), a methyleneoxydimethylene group (-$CH_2$-O-$CH_2CH_2$-) and a dimethyleneoxymethylene group (-$CH_2CH_2$-O-$CH_2$-).

Examples of the group containing a nitrogen atom (N) include an imino (-NH-) group, an N-substituted imino group, an iminooxy (-NH-O-) group, an N-substituted iminooxy group, an oxyimino (-O-NH-) group and an N-substituted oxyimino group.

Examples of the divalent group formed by bonding a group containing a nitrogen atom (N) and a saturated divalent hydrocarbon group include an "imino $C_{2-3}$ alkylene group" such as an iminodimethylene group (-NH-$CH_2CH_2$-), a "$C_{2-3}$ alkyleneimino group" such as a dimethyleneimino group (-$CH_2CH_2$-NH-), an "imino $C_{1-2}$ alkyleneimino group"

such as an iminomethyleneimino group ($-NH-CH_2-NH-$), and a "$C_{1-2}$ alkyleneimino C1-C2 alkylene group" such as a methyleneiminomethylene group ($-CH_2-NH-CH_2-$), a methyleneiminodimethylene group ($-CH_2-NH-CH_2CH_2-$) and a dimethyleneiminomethylene group ($-CH_2CH_2-NH-CH_2-$).

Examples of the group containing a sulfur atom (S) include a thio (-S-) group, a sulfinyl (-S(O)-) group and a sulfonyl ($-S(O)_2-$) group.

Examples of the divalent group formed by bonding a group containing a sulfur atom (S) and a saturated divalent hydrocarbon group include a "thio $C_{2-4}$ alkylene group" such as a thiodimethylene group ($-S-CH_2CH_2-$) and a thiotrimethylene group ($-S-CH_2CH_2CH_2-$), a "$C_{2-4}$ alkylene thio group" such as a dimethylene thio group ($-CH_2CH_2-S-$), a "sulfinyl-$C_{2-4}$ alkylene group", a "sulfonyl-$C_{2-4}$ alkylene group", a "$C_{2-4}$ alkylene-sulfinyl group" and a "$C_{2-4}$ alkylene-sulfonyl group".

In addition, an "oxy $C_{1-2}$ alkylene thio group", a "thio $C_{1-2}$ alkylene oxy group", an "oxy $C_{1-2}$ alkylene sulfonyl group", a "sulfonyl $C_{1-2}$ alkylene oxy group" and the like can be mentioned.

In the present invention, the "divalent organic group that two X groups may form together" is preferably a substituted or unsubstituted saturated divalent hydrocarbon group having 1 to 4 carbon atoms; or a divalent group formed by bonding a group containing one or more hetero atoms selected from the group consisting of O and S and a substituted or unsubstituted saturated divalent hydrocarbon group having 1 to 4 carbon atoms. The group containing an oxygen atom (O) is preferably an oxy (-O-) group, and the group containing a sulfur atom (S) is preferably a thio (-S-) group or a sulfonyl ($-S(O)_2)-$) group.

In the present invention, Q is preferably a substituted or unsubstituted phenyl group. That is, the compound (I) is preferably a compound represented by a formula (I-1) or a salt thereof.

[Chemical Formula 4]

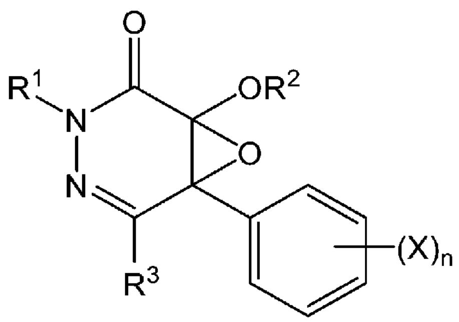

(1-1)

In the formula (I-1), $R^1$ to $R^3$ have the same meanings as those defined in the formula (1). X represents a substituent on the phenyl group mentioned above. n represents an integer from 0 to 5. When n is 2 or more, the X groups may be the same or different. When n is 2 or more, two X groups thereof may be combined to form a divalent organic group.

In the present invention, the compound (I) is more preferably a compound represented by a formula (1-2) or a salt thereof.

[Chemical Formula 5]

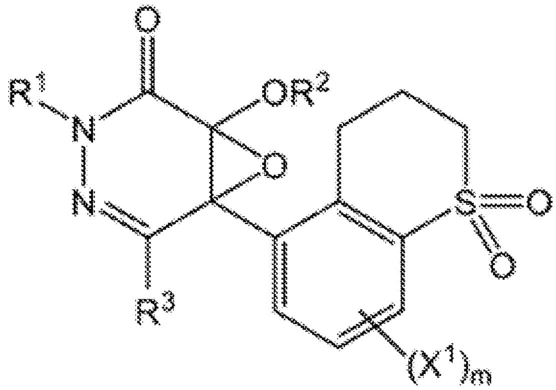

(I-2)

In the formula (I-2), $R^1$ to $R^3$ have the same meanings as those defined in the formula (I).

$X^1$ represents a halogeno group, a substituted or unsubstituted $C_{1-6}$ alkyl group, a substituted or unsubstituted $C_{2-6}$ alkenyl group, a substituted or unsubstituted $C_{2-6}$ alkynyl group, a substituted or unsubstituted $C_{1-6}$ alkoxy group, a substituted or unsubstituted $C_{1-6}$ alkylthio group, a substituted or unsubstituted $C_{1-6}$ alkylsulfinyl group, a substituted or unsubstituted $C_{1-6}$ alkylsulfonyl group, a substituted or unsubstituted $C_{3-6}$ cycloalkyl group, a substituted or unsubstituted phenyl group, a substituted or unsubstituted 5- to 6-membered heterocyclyl group, a nitro group, or a cyano group.

m represents an integer from 0 to 3. When m is 2 or more, the $X^1$ groups may be the same or different.

Specific examples of these groups represented by $X^1$ include the same as those exemplified for X.

The substituent on the "$C_{1-6}$ alkyl group", "$C_{2-6}$ alkenyl group", "$C_{2-6}$ alkynyl group", "$C_{1-6}$ alkoxy group", "$C_{1-6}$ alkylthio group", "$C_{1-6}$ alkylsulfinyl group" or "$C_{1-6}$ alkylsulfonyl group" represented by $X^1$ is preferably a halogeno group. The substituent on the "$C_{3-6}$ cycloalkyl group" is preferably a halogeno group or a $C_{1-6}$ alkyl group. The substituent on the "phenyl group" or "5- to 6-membered heterocyclyl group" is preferably a halogeno group, a $C_{1-6}$ alkyl group, a $C_{1-6}$ haloalkyl group, a $C_{1-6}$ alkoxy group, a $C_{1-6}$ haloalkoxy group or a cyano group.

In the present invention, the compound (I) is particularly preferably a compound represented by a formula (I-3) or a salt thereof.

[Chemical Formula 6]

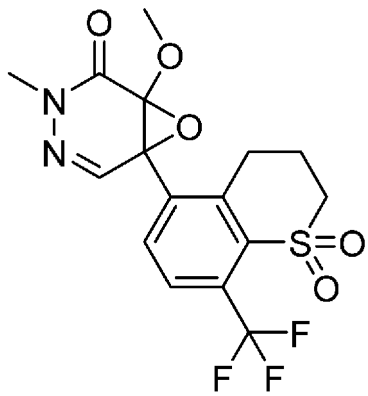

(I-3)

The compound (1) is not particularly limited depending on the production method thereof. The compound (I) can be produced, for example, by the method described in Examples and the like, using the compound obtained by the production method described in Patent Document 1 as a production intermediate thereof.

(Reaction scheme 1)

For example, the compound (I) can be prepared from a compound of a formula (2) as shown in the following

Reaction Scheme 1. The symbols in the formula (2) have the same meanings as those defined in the formula (I).

[Chemical Formula 7]

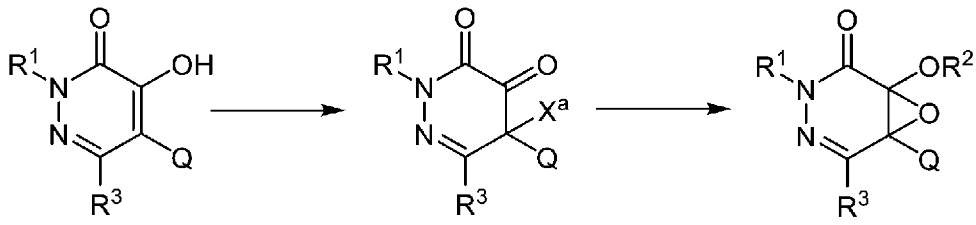

(2) (2Xa) (I)

The compound of the formula (I) can be prepared by reacting the compound of the formula (2) with a halogenating agent to construct an α-haloketone structure in the molecule, preparing a compound of a formula (2Xa), and subsequently reacting with an alkoxide such as $R_2ONa$ (corresponds to sodium methoxide when $R_2$ is a methyl group). $X^a$ in the formula (2Xa) represents a halogeno group such as a chloro group and a bromo group. The compound of the formula (2Xa) may be unstable, and it is preferable to carry out the subsequent reaction without isolation.

(Reaction scheme 2)

The compound of the formula (2) can be prepared from a compound of a formula (3) as shown in the following reaction scheme 2. The symbols in the formula (3) have the same meanings as those defined in the formula (I). $R^x$ represents a lower alkyl group, such as a methyl group. Hereinafter, $R^x$ has the same meaning as defined above.

[Chemical Formula 8]

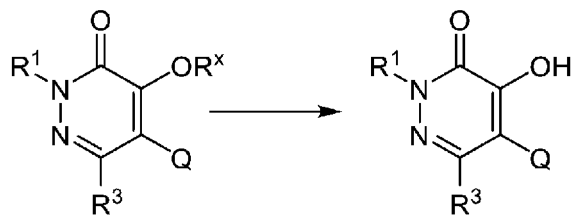

(3) (2)

The compound of the formula (2) can be prepared by heating the compound of the formula (3) with morpholine.

(Reaction scheme 3)

The compound of the formula (3) can be prepared by condensation of a compound of a formula (4) and a compound of a formula (5) as shown in the following reaction scheme 3.

The symbols in the formula (4) have the same meanings as those defined in the formula (I). $R^y$ represents a lower alkyl group, such as a methyl group, an ethyl group and the like. Further, $R^y$ groups may be bonded to each other to form a 1,3,2-dioxaborolane ring. Q in the formula (5) has the same meaning as Q in the formula (I). $X^b$ represents a halogeno group.

[Chemical Formula 9]

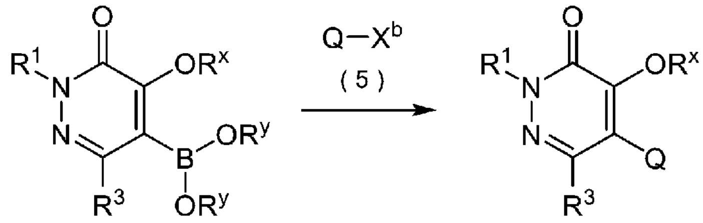


(4) (3)

The compound of the formula (3) can be prepared by reacting the compound of the formula (4) with the compound of the formula (5) in the presence of a suitable base (for example, an inorganic base such as potassium phosphate or cesium fluoride), a metal catalyst (for example, a palladium catalyst such as Pd(OAc)2), and a ligand (for example, a phosphine ligand) according to circumstances.

The metal catalyst and ligand may be added as a preformed complex (for example, a palladium / phosphine complex such as bis (triphenylphosphine) palladium dichloride or a [1,1-bis (diphenylphosphino) ferrocene] palladium dichloride dichloromethane adduct).

Q in the compound of the formula (5) represents a substituted or unsubstituted phenyl group or a substituted or unsubstituted naphthyl group, but the substituent on the phenyl group and the naphthyl group may be appropriately converted even after the reaction.

(Reaction scheme 4)

The compound of the formula (4) can be prepared from the compound of the formula (6) as shown in the following reaction scheme 4. The symbols in the formula (6) have the same meanings as those defined in the formula (I).

[Chemical Formula 10]

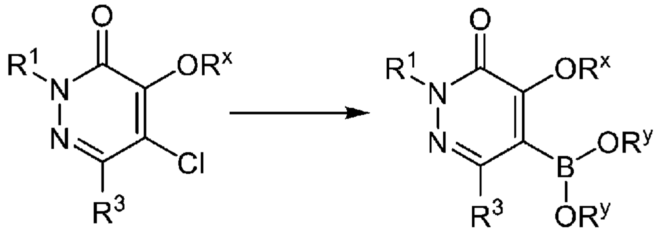

(6) (4)

The compound of the formula (4) can be prepared by reacting the compound of the formula (6) with boronic acid or an ester of boronic acid, such as bis (pinacolato) diboron, in the presence of a suitable base (for example, an inorganic base such as potassium phosphate or cesium fluoride), a metal catalyst (for example, a palladium catalyst such as $Pd_2(dba)_3$ and $Pd(OAc)_2$) and a ligand (for example, a phosphine ligand) according to circumstances.

The metal catalyst and ligand may be added as a preformed complex (for example, a palladium / phosphine complex such as bis (triphenylphosphine) palladium dichloride or a [1,1-bis (diphenylphosphino) ferrocene] palladium dichloride dichloromethane adduct).

(Reaction scheme 5)

The compound of the formula (6) can be prepared from the compound of the formula (7) as shown in the following reaction scheme 5. The symbols in the formula (7) have the same meanings as those defined in the formula (I).

[Chemical Formula 11]

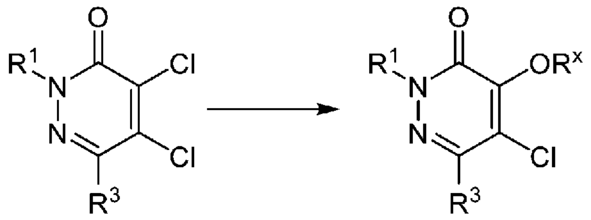

(7) (6)

The compound of the formula (6) can be prepared by reacting the compound of the formula (7) with a suitable metal alkoxide such as sodium methoxide.
The compound of the formula (7) can be prepared by a known method.

(Reaction scheme 3A)

The compound of the formula (3) can be prepared by condensation of the compound of the formula (6) and the compound of the formula (8) as shown in the following reaction scheme 3A.
Q in the formula (8) has the same meaning as Q in the formula (I). $R^y$ represents a lower alkyl group, such as a methyl group, an ethyl group and the like. Further, $R^y$ groups may be bonded to each other to form a 1 ,3,2-dioxaborolane ring.

[Chemical Formula 12]

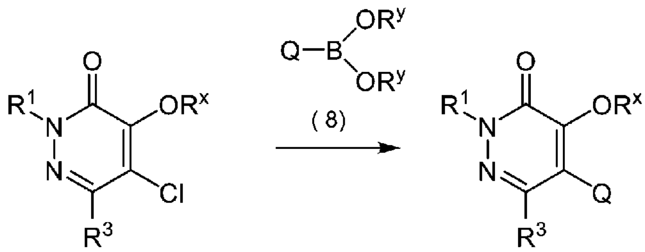


(6) (3)

The compound of the formula (3) can be prepared by reacting the compound of the formula (6) with the compound of the formula (8) in the presence of a suitable base (for example, an inorganic base such as potassium phosphate or cesium fluoride), a metal catalyst (for example, a palladium catalyst such as $Pd(OAc)_2$), and a ligand (for example, a phosphine ligand) according to circumstances.
The metal catalyst and ligand may be added as a preformed complex (for example, a palladium / phosphine complex such as bis (triphenylphosphine) palladium dichloride or a [1,1-bis (diphenylphosphino) ferrocene] palladium dichloride dichloromethane adduct).
Q in the compound of the formula (8) represents a substituted or unsubstituted phenyl group or a substituted or unsubstituted naphthyl group, but the substituent on the phenyl group and the naphthyl group may be appropriately converted even after the reaction.

[Compound (II)]

A compound (II) is a compound other than the compound (I) that has herbicidal activity.
Preferred examples of the compound (II) include the compounds described in HRAC (https://hracglobal.com/tools/classification-lookup), or agriculturally acceptable salts, isomers, esters or derivatives thereof.
As the compound (II), an agent having a herbicidal activity (herbicide) with a different action mechanism from that of the compound (I) is preferable.
As the compound (II), for example,

(B1) a herbicide belonging to a group of acetyl-CoA carboxylase (ACCase) inhibitors,

(B2) a herbicide belonging to a group of acetolactate synthase (ALS) or acetohydroxyacid synthase (AHAS) inhibitors,
(B3) a herbicide belonging to a group of microtubule polymerization inhibitors,
(B4) a herbicide belonging to a group of indoleacetic acid-like active (synthetic auxin) agents,
(B5) a herbicide belonging to a group of photosynthesis (photosystem II) inhibitors - serine 264 binders,
(B6) a herbicide belonging to a group of photosynthesis (photosystem II) inhibitors - histidine 215 binders,
(B9) a herbicide belonging to a group of 5-enolpyruvylshikimate-3-phosphate (EPSP) synthase inhibitors,
(B10) a herbicide belonging to a group of glutamine synthetase inhibitors,
(B12) a herbicide belonging to a group of inhibitors of phytoene desaturase (PDS) in the carotenoid biosynthesis pathway inducing chlorosis,
(B13) a herbicide belonging to a group of 1-deoxy-D-xylulose 5-phosphate (DOXP) synthase inhibitors inducing chlorosis,
(B14) a herbicide belonging to a group of protoporphyrinogen oxidase (PPO) inhibitors,
(B15) a herbicide belonging to a group of very long chain fatty acid (VLCFA) synthesis inhibitors,
(B18) a herbicide belonging to a group of dihydropteroate (DHP) synthase inhibitors,
(B19) a herbicide belonging to a group of auxin transport inhibitors,
(B22) a herbicide belonging to a group of photosystem I electron conversion agents,
(B23) a herbicide belonging to a group of mitosis / microtubule formation inhibitors,
(B24) a herbicide belonging to a group of uncoupling (membrane disrupting) agents,
(B27) a herbicide belonging to a group of 4-hydroxyphenylpyruvate dioxygenase (4-HPPD) inhibitors inducing chlorosis,
(B28) a herbicide belonging to a group of dihydroorotate dehydrogenase (DHODH) inhibitors,
(B29) a herbicide belonging to a group of cell wall (cellulose) synthesis inhibitors,
(B30) a herbicide belonging to a group of fatty acid thioesterase inhibitors,
(B31) a herbicide belonging to a group of serine-threonine protein phosphatase inhibitors,
(B32) a herbicide belonging to a group of solanesyl diphosphate synthase inhibitors,
(B33) a herbicide belonging to a group of homogentisate solanesyltransferase inhibitors,
(B34) a herbicide belonging to a group of lycopene cyclase inhibitors, and
(B0) other herbicides with unknown action mechanisms,
and the like can be mentioned.

Examples of the herbicide (B1) belonging to a group of acetyl-CoA carboxylase (ACCase) inhibitors include clodinafop-propargyl, clofop, cyhalofop-butyl, diclofop-methyl, fenoxaprop-ethyl, fenthiaprop, fluazifop-butyl, haloxyfop-methyl, isoxapyrifop, metamifop, quizalofop-ethyl, alloxydim, butroxydim, clethodim, cloproxydim, cycloxydim, profoxydim, sethoxydim, tepraloxydim, tralkoxydim, pinoxaden, propaquizafop and fluazifop.

Examples of the herbicide (B2) belonging to a group of acetolactate synthase (ALS) or acetohydroxyacid synthase (AHAS) inhibitors include imazamethabenz-methyl, imazamox, imazapic, imazapyr, imazaquin, imazethapyr, bispyribac-sodium, pyribenzoxim (prodrug of bispyribac), pyriftalid, pyriminobac-methyl, pyrithiobac-sodium, pyrimisulfan, triafamone, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfron, flucetosulfuron, flupyrsulfuron-methyl-Na, foramsulfuron, halosulfuron-methyl, imazosulfuron, iodosulfuron-methyl-Na, mesosulfuron-methyl, metazosulfuron, metsulfuron-methyl, nicosulfuron, orthosulfamuron, oxasulfuron, primisulfuron-methyl, propyrisulfuron, prosulfuron, pyrazosulfuron-ethyl, rimsulfuron, sulfometuron-methyl, sulfosulfuron, thifensulfuron-methyl, triasulfuron, tribenuron-methyl, trifloxysulfuron-Na, triflusulfuron-methyl, tritosulfuron, flucarbazone, flucarbazone-Na, propoxycarbazone-Na, thiencarbazone-methyl, cloransulam-methyl, diclosulam, florasulam, flumetsulam, metosulam, penoxsulam, pyroxsulam, iodosulfuron-methyl, monosulfuron-methyl, iofensulfuron, metosulfam, mesosulfuron and trifloxysulfuron.

Examples of the herbicide (B3) belonging to a group of microtubule polymerization inhibitors include propyzamide (pronamide), TCTP, chlorthal-dimethyl (DCPA), bethrodine (benefin, benfluralin), butralin, dinitramine, ethalfluralin, fluchloralin, isopropalin, nitralin, oryzalin, pendimethalin, prodiamine, profluralin, trifluralin, butamifos, DMPA, dithiopyr, thiazopyr and chlorthal.

Examples of the herbicide (B4) belonging to a group of indoleacetic acid-like active (synthetic auxin) agents include chloramben, MDBA (dicamba), TCBA (2,3,8-TBA) (TBA), benazolin-ethyl, 2,4,5-T, 2,4-PA (2,4-D), 2,4-DB, 2,4-D 2-ethylhexyl ester, 2,4-D amine, clomeprop, dichlorprop, fenoprop, MCPA, MCPB, MCPP (mecoprop), chlorfenac (fenac), chlorfenprop, aminopyralid, clopyralid, florpyrauxifen, halauxifen, halauxifen-methyl, picloram, fluroxypyr, triclopyr, aminocyclopyrachlor, quinclorac, quinmerac, chlorflurenol, chlorflurenol-methyl and benazolin.

Examples of the herbicide (B5) belonging to a group of photosynthesis (photosystem II) inhibitors - serine 264 binders include chloranocryl (dicryl), CMMP (pentanochlor), DCPA (propanil), chlorprocarb, desmedipham, phenisopham, phenmedipham, brompyrazon, PAC (chloridazon, pyrazon), ametryn, atraton, atrazine, aziprotryne (aziprotryn), chlorazine, CP 17029, cyanazine, cyprazine, desmetryn, dimethametryn, dipropetryn, eglinazine-ethyl, ipazine,

methoprotryne (methoprotryn), procyazine, proglinazine-ethyl, prometon, prometryn, propazine, sebuthylazine, secbumeton, CAT (simazine), simetryn, terbumeton, terbuthylazine, terbutryn, trietazine, ethiozin, hexazinone, isomethiozin, metamitron, metribuzin, amicarbazone, bromacil, isocil, lenacil, terbacil, benzthiazuron, bromuron, buturon, chlorbromuron, chlorotoluron, chloroxuron, difenoxuron, dimefuron, DCMU (diuron), ethidimuron, fenuron, fluometuron, fluothiuron, isoproturon, isouron, linuron, methabenzthiazuron, metobenzuron, metobromuron, metoxuron, monolinuron, CMU (monuron), neburon, parafluron, siduron, tebuthiuron, thiazafluron, cypromid, cybutryne and karbutilate.

Examples of the herbicide (B6) belonging to a group of photosynthesis (photosystem II) inhibitors - histidine 215 binders include bentazon, bromofenoxim, bromoxynil, ioxynil, pyridate and pyridafol.

Examples of the herbicide (B9) belonging to a group of 5-enolpyruvylshikimate-3-phosphate (EPSP) synthase inhibitors include glyphosate.

Examples of the herbicide (B10) belonging to a group of glutamine synthetase inhibitors include bialaphos (bilanafos), glufosinate-ammonium and glufosinate.

Examples of the herbicide (B12) belonging to a group of inhibitors of phytoene desaturase (PDS) in the carotenoid biosynthesis pathway inducing chlorosis include fluridone, flurtamone, flurochloridone, norflurazon, beflubutamid, diflufenican, picolinafen and metflurazon.

Examples of the herbicide (B13) belonging to a group of 1-deoxy-D-xylulose 5-phosphate (DOXP) synthase inhibitors inducing chlorosis include bixlozone and clomazone.

Examples of the herbicide (B14) belonging to a group of protoporphyrinogen oxidase (PPO) inhibitors include acifluorfen, bifenox, chlomethoxynil (chlomethoxyfen), CNP (chlornitrofen), fluorodifen, fluoroglycofen-ethyl, CFNP (fluoronitrofen), fomesafen, lactofen, NIP (nitrofen), oxyfluorfen, butafenacil, chlorphthalim, cinidon-ethyl, flumiclorac-pentyl, flumioxazin, flumipropyn, fluthiacet-methyl, pentoxazone, saflufenacil, tiafenacil, trifludimoxazin, oxadiargyl, oxadiazon, azafenidin, carfentrazone-ethyl, sulfentrazone, pyraclonil, pyraflufen-ethyl, epyrifenacil, halosafen, ethoxyfen-ethyl, thidiazimin, benzfendizone, profluazol, flufenpyr-ethyl and bencarbazone.

Examples of the herbicide (B15) belonging to a group of very long chain fatty acid (VLCFA) synthesis inhibitors include cafenstrole, fentrazamide, ipfencarbazone, benfuresate, ethofumesate, fenoxasulfone, pyroxasulfone, indanofan, tridiphane, butylate, hexylthiocarbam (cycloate), dimepiperate, EPTC, esprocarb, molinate, orbencarb, pebulate, prosulfocarb, benthiocarb (thiobencarb), tiocarbazil, tri-allate, vernolate, acetochlor, alachlor, CDAA (allidochlor), butachlor, butenachlor, delachlor, diethatyl-ethyl, dimethachlor, dimethenamid, dimethenamid-P, metazachlor, metolachlor, S-metolachlor, pethoxamid, pretilachlor, propachlor, propisochlor, prynachlor, thenylchlor, flufenacet, mefenacet, anilofos, piperophos, diallate and dimesulfazet.

Examples of the herbicide (B18) belonging to a group of dihydropteroate (DHP) synthase inhibitors include asulam.

Examples of the herbicide (B19) belonging to a group of auxin transport inhibitors include diflufenzopyr-sodium, NPA (naptalam) and diflufenzopyr.

Examples of the herbicide (B22) belonging to a group of photosystem I electron conversion agents include cyperquat, diquat, morfamquat and paraquat.

Examples of the herbicide (B23) belonging to a group of mitosis / microtubule formation inhibitors include barban, carbetamide, chlorbufam, IPC (chlorpropham), propham and swep.

Examples of the herbicide (B24) belonging to a group of uncoupling (membrane disrupting) agents include dinosam, DNBP (dinoseb), dinoterb, DNOC, etinofen and medinoterb.

Examples of the herbicide (B27) belonging to a group of 4-hydroxyphenylpyruvate dioxygenase (4-HPPD) inhibitors inducing chlorosis include isoxaflutole, benzofenap, pyrasulfotole, pyrazolate (pyrazolynate), pyrazoxyfen, tolpyralate, topramezone, bicyclopyrone, fenquinotrione, mesotrione, sulcotrione, tefuryltrione, tembotrione, benzobicyclon, isoxachlortole, methoxyphenone, ketospiradox, tripyrasulfone, fenpyrazone, dioxopyritrione, cypyrafluone, bipyrazone, benquitrione and lancotrione sodium.

Examples of the herbicide (B28) belonging to a group of dihydroorotate dehydrogenase (DHODH) inhibitors include tetflupyrolimet.

Examples of the herbicide (B29) belonging to a group of cell wall (cellulose) synthesis inhibitors include indaziflam, triaziflam, isoxaben, DCBN (chlorthiamid), DBN (dichlobenil) and flupoxam.

Examples of the herbicide (B30) belonging to a group of fatty acid thioesterase inhibitors include cinmethylin and methiozolin.

Examples of the herbicide (B31) belonging to a group of serine-threonine protein phosphatase inhibitors include endothall.

Examples of the herbicide (B32) belonging to a group of solanesyl diphosphate synthase inhibitors include aclonifen.

Examples of the herbicide (B33) belonging to a group of homogentisate solanesyltransferase inhibitors include cyclopyrimorate.

Examples of the herbicide (B34) belonging to a group of lycopene cyclase inhibitors include ATA (amitrole).

Examples of the other herbicides (B0) with unknown action mechanisms include diphenamid, naproanilide, napropamide, flamprop-M, tebutam, SAP (bensulide), DPA (dalapon), tetrapion (flupropanate), TCA, mefluidide, perfluidone, bromobutide, cumyluron, difenzoquat, DSMA, dymron (daimuron), etobenzanid, fosamine, methyldymron, monalide, MSMA, oleic acid, oxaziclomefone, pelargonic acid, pyributicarb, ACN (quinoclamine), flamprop-isopropyl, dazomet, sodium chlorate, CAMA, cacodylic acid, metam, rimisoxafen, cyclopyranil and clacyfos.

As the compound (11), at least one of the above-exemplified compounds can be used, and it is preferable to use two or more of the above-exemplified compounds in combination.

The compound (II) is preferably haloxyfop-methyl, clethodim, pinoxaden, foramsulfuron, rimsulfuron, thifensulfuron-methyl, flucarbazone, flucarbazone-Na, thiencarbazone-methyl, flumetsulam, pendimethalin, trifluralin, MDBA (dicamba), 2,4-PA (2,4-D), 2,4-D 2-ethylhexyl ester, 2,4-D amine, MCPA, clopyralid, picloram, fluroxypyr, atrazine, CAT (simazine), terbuthylazine, metribuzin, amicarbazone, chlorotoluron, bentazon, bromoxynil, glyphosate, glufosinate-ammonium, picolinafen, clomazone, flumioxazin, saflufenacil, carfentrazone-ethyl, pyroxasulfone, prosulfocarb, tri-allate, acetochlor, alachlor, dimethenamid, dimethenamid-P, metolachlor, S-metolachlor, flufenacet, asulam, diflufenzopyr-sodium, diquat, mesotrione, isoxaben, cinmethylin, aclonifen, cyclopyrimorate, ATA (amitrole), epyrifenacil, isoxaflutole, sethoxydim, tepraloxydim, tetflupyrolimet, nicosulfuron, halauxifen, halauxifen-methyl, hexazinone, tebuthiuron, topramezone or flupoxam.

The compound (II) is more preferably haloxyfop-methyl, clethodim, pinoxaden, foramsulfuron, rimsulfuron, thifensulfuron-methyl, flucarbazone, flucarbazone-Na, thiencarbazone-methyl, flumetsulam, pendimethalin, trifluralin, MDBA (dicamba), 2,4-PA (2,4-D), 2,4-D 2-ethylhexyl ester, 2,4-D amine, MCPA, clopyralid, picloram, fluroxypyr, atrazine, CAT (simazine), terbuthylazine, metribuzin, amicarbazone, chlorotoluron, bentazon, bromoxynil, glyphosate, glufosinate-ammonium, picolinafen, clomazone, flumioxazin, saflufenacil, carfentrazone-ethyl, pyroxasulfone, prosulfocarb, tri-allate, acetochlor, alachlor, dimethenamid, dimethenamid-P, metolachlor, S-metolachlor, flufenacet, asulam, diflufenzopyr-sodium, diquat, mesotrione, isoxaben, cinmethylin, aclonifen, cyclopyrimorate, ATA (amitrole), epyrifenacil, isoxaflutole, sethoxydim, tepraloxydim, tetflupyrolimet, nicosulfuron, halauxifen, halauxifen-methyl, hexazinone, tebuthiuron, topramezone, flupoxam, sulfentrazone, halosulfuron-methyl, rimisoxafen, linuron or diflufenican.

The compound (11) is still more preferably haloxyfop-methyl, clethodim, pinoxaden, foramsulfuron, rimsulfuron, thifensulfuron-methyl, flucarbazone, flucarbazone-Na, thiencarbazone-methyl, flumetsulam, pendimethalin, trifluralin, MDBA (dicamba), 2,4-PA (2,4-D), 2,4-D 2-ethylhexyl ester, 2,4-D amine, MCPA, clopyralid, picloram, fluroxypyr, atrazine, CAT (simazine), terbuthylazine, metribuzin, amicarbazone, chlorotoluron, bentazon, bromoxynil, glyphosate, glufosinate-ammonium, picolinafen, clomazone, flumioxazin, saflufenacil, carfentrazone-ethyl, pyroxasulfone, prosulfocarb, tri-allate, acetochlor, dimethenamid-P, S-metolachlor, flufenacet, diflufenzopyr-sodium, diquat, mesotrione, cinmethylin, epyrifenacil, sethoxydim, halauxifen, topramezone rimisoxafen, linuron or diflufenican.

Examples of the agriculturally acceptable salts, isomers or derivatives of the compound (II) include the followings.

As the salt of flucarbazone, flucarbazone sodium salt and the like can be mentioned.

As the salt of MDBA (dicamba), dicamba isopropylamine salt, dicamba dimethylamine salt, dicamba potassium salt, dicamba sodium salt and the like can be mentioned.

As the salt or derivative of 2,4-PA(2,4-D), 2,4-D 2-ethylhexyl ester, 2,4-D dimethylamine salt, 2,4-D choline salt, 2,4- D-butyric acid sodium salt, 2,4-dichlorophenoxyacetic acid triisopropanolamine salt, 2,4-D amine salt and the like can be mentioned.

As the salt or derivative of MCPA, MCPA sodium salt, MCPA ethyl, MCPA-DMA (dimethylamine salt), MCPA-EHE (MCPA 2-ethylhexyl ester) and the like can be mentioned.

As the slat of clopyralid, clopyralid monoethanolamine salt and the like can be mentioned.

As the derivative of fluroxypyr, fluroxypyr 1-methylheptyl ester and the like can be mentioned.

As the salt of bentazone, bentazone sodium salt and the like can be mentioned.

As the derivative of bromoxynil, bromoxynil octanoate and the like can be mentioned.

As the salt of glyphosate, glyphosate ammonium salt, glyphosate isopropylamine salt, glyphosate potassium salt, glyphosate sodium salt and the like can be mentioned.

As the salt of glyfosinate, glufosinate P sodium salt, glufosinate ammonium salt and the like can be mentioned.

As the isomer of dimethenamide, dimethenamide-P and the like can be mentioned.

As the isomer of metolachlor, S-metolachlor and the like can be mentioned.

As the salt of ashram, ashram sodium salt and the like can be mentioned.

As the salt of diflufenzopyr, diflufenzopyr sodium salt and the like can be mentioned.

As the ester of halauxifen, halauxifen-methyl and the like can be mentioned.

In the composition of the present invention, a ratio of the compound (1) and the compound (II) can be arbitrarily selected. A compound (I): compound (II) weight ratio is usually in a range of 1: 1,000 to 1,000: 1, preferably in a range of 1: 500 to 500: 1, more preferably in a range of 1: 250 to 250: 1, particularly preferably in a range of 1: 100 to 100: 1, and most preferably in a range of 1: 50 to 50: 1.

[Compound (111)]

In addition to the compound (II), one or more compounds (III) can be further combined with the composition of the present invention.
The compound (111) is a phytotoxicity reducing agent (safener).
As the phytotoxicity reducing agent (safener) that can be used in the present invention, those described in the 19th edition of "The Pesticide Manual" and the like can be preferably exemplified. These also include forms such as stereoisomers and derivatives, salts, and esters.
Examples thereof include benoxacor, cloquintocet, cloquintocet-mexyl, cyometrinil, cyprosulfamide, dichlormid, dicyclonon, dietholate, fenchlorazole, fenchlorazole-ethyl, fenclorim, flurazole, fluxofenim, furilazole, isoxadifen, isoxadifen-ethyl, mefenpyr, mefenpyr-diethyl, mephenate, naphthalic anhydride and oxabetrinil.
The phytotoxicity reducing agent (safener) that can be used in the present invention is preferably cloquintocet-mexyl, cyprosulfamide, furilazole, isoxadifen-ethyl, mefenpyr-diethyl or benoxacor.
In the composition of the present invention, a ratio of the compound (1) and the compound (III) can be arbitrarily selected. A compound (I): compound (III) weight ratio is usually in a range of 1: 1,000 to 1,000: 1, preferably in a range of 1: 500 to 500: 1, more preferably in a range of 1: 250 to 250: 1, particularly preferably in a range of 1: 100 to 100: 1, and most preferably in a range of 1: 50 to 50: 1.
The composition of the present invention exhibits high herbicidal activity in both methods of soil treatment and foliage treatment under upland farming conditions.
The composition of the present invention is effective against various field weeds and may show selectivity for crops such as maize and wheat.
In addition, the composition of the present invention may exhibit plant growth regulating effects such as growth suppressing effects on useful plants such as crops, ornamental plants and fruit trees.
Further, the composition of the present invention has excellent herbicidal effects on paddy weeds and may show selectivity for rice. In particular, it has excellent herbicidal effects on paddy weeds such as Echinochloa spp., Cyperus difforis, Sagittaria trifolia and Schoenoplectiella hotarui, and may show selectivity for rice.
Furthermore, the composition of the present invention can also be applied for the control of weeds in places such as orchards, lawns, track ends and vacant sites.
Useful plants to which the composition of the present invention can be applied include grains, for example, barley and wheat, and crops such as cotton, rapeseed, sunflower, maize, rice, soybean, sugar beet, sugar cane and lawn.
Crops may also include trees such as fruit trees, palm trees, coconut trees of other nuts, and also include vines such as grapes, fruit shrubs, fruit plants and vegetables.
Examples of upland field weeds to be controlled include the following weeds.

(A) Monocotyledonous weeds

(1) Weeds of the family Cyperaceae

Weeds of the genus Cyperus such as Cyperus esculentus, Cyperus iria, Cyperus microiria and Cyperus rotundus.

(2) Weeds of the family Poaceae

Weeds of the genus Alopecurus such as Alopecurus aequalis and Alopecurus myosuroides;
Weeds of the genus Apera such as Apera spica-venti;
Weeds of the genus Avena such as Avena sativa;
Weeds of the genus Bromus such as Bromus japonicus and Bromus sterilis;
Weeds of the genus Digitaria such as Digitaria ciliaris and Digitaria sanguinalis;
Weeds of the genus Echinochloa such as Echinochloa crus-galli;
Weeds of the genus Eleusine such as Eleusine indica;
Weeds of the genus Lolium such as Lolium multiflorum Lam.;
Weeds of the genus Panicum such as Panicum dichotomiflorum;
Weeds of the genus Poa such as Poa annua;
Weeds of the genus Setaria such as Setaria faberi, Setaria pumila and Setaria viridis;
Weeds of the genus Sorghum such as Sorghum bicolor; and
Weeds of the genus Urochloa such as Urochloa platyphylla.

(B) Dicotyledonous weeds

(1) Weeds of the family Amaranthaceae

Weeds of the genus Amaranthus such as Amaranthus blitum, Amaranthus palmeri, Amaranthus retroflexus and Amaranthus rudis;
Weeds of the genus Chenopodium such as Chenopodium album;
Weeds of the genus Bassia such as Bassia scoparia.

(2) Weeds of the family Asteraceae

Weeds of the genus Ambrosia such as Ambrosia artemisiifolia and Ambrosia trifida;
Weeds of the genus Conyza such as Conyza canadensis and Conyza sumatrensis;
Weeds of the genus Erigeron such as Erigeron annuus;
Weeds of the genus Matricaria such as Matricaria inodora and Matricaria recutita;
Weeds of the genus Xanthium such as Xanthium occidentale.

(3) Weeds of the family Caryophyllaceae

Weeds of the genus Sagina such as Sagina japonica;
Weeds of the genus Stellaria such as Stellaria media.

(4) Weeds of the family Convolvulaceae

Weeds of the genus Calystegia such as Calystegia japonica;
Weeds of the genus Ipomoea such as Ipomoea coccinea, Ipomoea hederacea, Ipomoea lacunosa and Ipomoea triloba.

(5) Weeds of the family Lamiaceae

Weeds of the genus Lamium such as Lamium album var. barbatum, Lamium amplexicaule and Lamium purpureum.

(6) Weeds of the family Malvaceae

Weeds of the genus Abutilon such as Abutilon theophrasti;
Weeds of the genus Sida such as Sida spinosa.

(7) Weeds of the family Plantaginaceae

Weeds of the genus Veronica such as Veronica persica.

(8) Weeds of the family Polygonaceae

Weeds of the genus Fallopia such as Fallopia convolvulus.
Weeds of the genus Persicaria such as Persicaria lapathifolia and Persicaria longiseta.

(9) Weeds of the family Rubiaceae

Weeds of the genus Galium such as Galium spurium var. echinospermon.
Examples of paddy weeds to be controlled include the following weeds.

(A) Monocotyledonous weeds

(1) Weeds of the family Alismataceae

Weeds of the genus Sagittaria such as Sagittaria pygmaea Miq. and Sagittaria trifolia.

(2) Weeds of the family Cyperaceae

Weeds of the genus Cyperus such as Cyperus serotinus and Cyperus difforis;
Weeds of the genus Eleocharis such as Eleocharis kuroguwai Ohwi;
Weeds of the genus Schoenoplectiella such as Schoenoplectiella hotarui and Schoenoplectiella juncoides Roxb.
Weeds of the genus Scirpus such as Scirpus maritimus and Scirpus nipponicus.

(3) Weeds of the family Poaceae

Weeds of the genus Echinochloa such as Echinochloa oryzoides and Echinochloa crus-galli;
Weeds of the genus Leersia such as Leersia japonica;
Weeds of the genus Paspalum such as Paspalum distichum.

(4) Weeds of the family Pontederiaceae

Weeds of the genus Monochoria such as Monochoria korsakowii and Monochoria vaginalis var. plantaginea.

(B) Dicotyledonous weeds

(1) Weeds of the family Apiaceae

Weeds of the genus Oenanthe such as Oenanthe javanica.

(2) Weeds of the family Elatinaceae

Weeds of the genus Elatine such as Elatine triandra.

(3) Weeds of the family Linderniaceae

Weeds of the genus Lindernia such as Lindernia dubia subsp. major, Lindernia dubia subsp. dubia and Lindernia procumbens.

(4) Weeds of the family Lythraceae

Weeds of the genus Rotala such as Rotala indica var. uliginosa.
The composition of the present invention may be formulated into a dosage form generally adopted as an agricultural chemical, for example, a wettable powder, a granule, a powder, an emulsion, a water soluble powder, a suspension, a flowable or the like.
A known additive of carrier can be used for formulation.
That is, one aspect of the present invention is a herbicidal composition containing an agrochemically acceptable solid carrier and / or liquid carrier.
For solid dosage forms, vegetable powders such as soy flour and wheat flour, fine mineral powders such as diatomaceous earth, apatite, gypsum, talc, bentonite, pyrophyllite and clay, and solid carriers of organic and inorganic

compounds such as sodium benzoate, urea and mirabilite can be used.

For liquid dosage forms, petroleum fractions such as kerosine, xylene and solvent naphtha, and liquid carriers such as cyclohexane, cyclohexanone, dimethylformamide, dimethyl sulfoxide, alcohols, acetone, trichloroethylene, methyl isobutyl ketone, mineral oil, vegetable oil and water can be used.

In formulation, a surfactant can be added as needed. Examples of the surfactant include nonionic surfactants such as alkylphenyl ethers to which polyoxyethylene is added, alkyl ethers to which polyoxyethylene is added, higher fatty acid esters to which polyoxyethylene is added, sorbitan higher fatty acid esters to which polyoxyethylene is added, and tristyrylphenyl ethers to which polyoxyethylene is added, sulfuric acid ester salts of alkylphenyl ethers to which polyoxyethylene is added, alkylnaphthalene sulfonates, polycarboxylates, lignin sulfonates, formaldehyde condensates of alkylnaphthalene sulfonates, and isobutylene-maleic anhydride copolymers.

In the herbicidal composition of the present invention, the concentration of the active ingredient can be appropriately set according to the dosage form. For example, the concentration of the active ingredient in a wettable powder is preferably from 5 to 90% by weight, and more preferably from 10 to 85% by weight. The concentration of the active ingredient in an emulsion is preferably from 3 to 70% by weight, and more preferably from 5 to 60% by weight. The concentration of the active ingredient in a granule is preferably from 0.01 to 50% by weight, and more preferably from 0.05 to 40% by weight.

The wettable powder or emulsion obtained in this manner can be used as a suspension of emulsion by diluting with water to a predetermined concentration, and the granules can be directly sprayed on or mixed with the soil before or after germination of weeds. When the herbicidal composition of the present invention is applied to a farm field, an appropriate amount of 0.1 g or more of the active ingredient per hectare can be applied.

In addition, the herbicidal composition of the present invention can also be used by mixing with a known fungicide, fungicidal active ingredient, insecticide, insecticidal active ingredient, acaricide, acaricidal active ingredient, plant growth regulator, fertilizer or the like. By forming a mixture agent, not only labor saving can be achieved, but also even higher effects can be expected.

As the known fungicide, fungicidal active ingredient, insecticide, insecticidal active ingredient, acaricide, acaricidal active ingredient and plant growth regulator used in the present invention, for example, those described in the 19th edition of "The Pesticide Manual" and the like can be preferably exemplified, and forms such as their stereoisomers and derivatives, salts, and esters are also included.

## EXAMPLES

### [Formulation Examples]

Although some formulation examples relating to the herbicidal composition of the present invention are shown, the composition of the present invention, additives and addition ratios are not limited only to those in the present examples and can be changed in a wide range. The term "part" in the formulation examples indicates "part by weight".

(Formulation Example 1) Wettable powder

| | |
|---|---|
| Composition of the present invention | 20 parts |
| White carbon | 20 parts |
| Diatomaceous earth | 52 parts |
| Sodium alkyl sulfate | 8 parts |

The above components are mixed uniformly and finely pulverized to obtain a wettable powder containing 20% of an active ingredient.

(Formulation Example 2) Emulsion

| | |
|---|---|
| Composition of the present invention | 20 parts |
| Xylene | 55 parts |
| Dimethylformamide | 15 parts |

(continued)

| | |
|---|---|
| Polyoxyethylene phenyl ether | 10 parts |

The above components are mixed and dissolved to obtain an emulsion containing 20% of an active ingredient.

(Formulation Example 3) Granule

| | |
|---|---|
| Composition of the present invention | 5 parts |
| Talc | 40 parts |
| Clay | 38 parts |
| Bentonite | 10 parts |
| Sodium alkyl sulfate | 7 parts |

The above components are uniformly mixed and finely pulverized, and then granulated into a granular form having a diameter of 0.5 to 1.0 mm to obtain a granule containing 5% of an active ingredient.

Next, a production example of a compound (1) will be shown.

(Production Example 1)

1-methoxy-3-methyl-6-(1,1-dioxido-8-(trifluoromethyl)thiochroman-5-yl)-7-oxa-3,4-diazabicyclo [4.1.0] hept-4-en-2-one

Synthesis of [1-methoxy-3-methyl-6-(1,1-dioxido-8-(trifluoromethyl)thiochroman-5-yl)-7-oxa-3,4-diazabicyclo[4.1.0]hept-4-en-2-one]

[Chemical Formula 13]

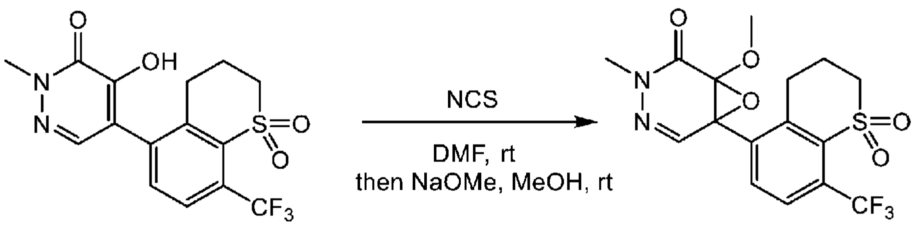


5-(1,1-dioxide-8-(trifluoromethyl)thiochroman-5-yl)-4-hydroxy-2-methylpyridazin-3(2H)-one (0.37 g) was dissolved in N,N-dimethylformamide (2 mL) and the resulting mixture was stirred at room temperature. N-chlorosuccinimide (0.10 g) was added thereto, and the resulting mixture was stirred at room temperature for 2 hours. Then, methanol (10 mL) and sodium methoxide (0.22 g) were added thereto, and the resulting mixture was stirred at the same temperature for 1 hour.

The reaction solution was concentrated under reduced pressure, and the obtained residue was purified by silica gel column chromatography to obtain 0.23 g of a target product. The melting point (m.p.) was 199-200°C.

(Reference Example 1)

Synthesis of 5-(1,1 -dioxad-8-(trifluoromethyl)thiochroman-5-yl)-4-hydroxy-2-methylpyridazin-3(2H)-one

[Chemical Formula 14]

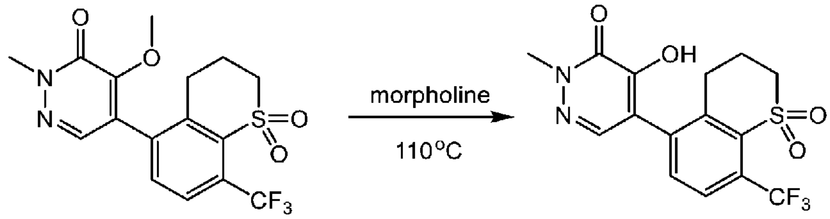


5-(1,1-dioxide-8-(trifluoromethyl)thiochroman-5-yl)-4-methoxy-2-methylpyridazin-3(2H)-one (0.39 g) was dissolved in morpholine (2 mL), and then the resulting mixture was heated under reflux at 110°C for 1 hour.

The reaction solution was poured into hydrochloric acid and then extracted with ethyl acetate. The obtained organic layer was washed with saturated brine, dried over anhydrous magnesium sulfate, and filtered. The filtrate was concentrated under reduced pressure to obtain 0.31 g of a target product.

(Reference Example 2)

Synthesis of 5-(1,1-dioxad-8-(trifluoromethyl)thiochroman-5-yl)-4-methoxy-2-methylpyridazin-3(2H)-one

[Chemical Formula 15]

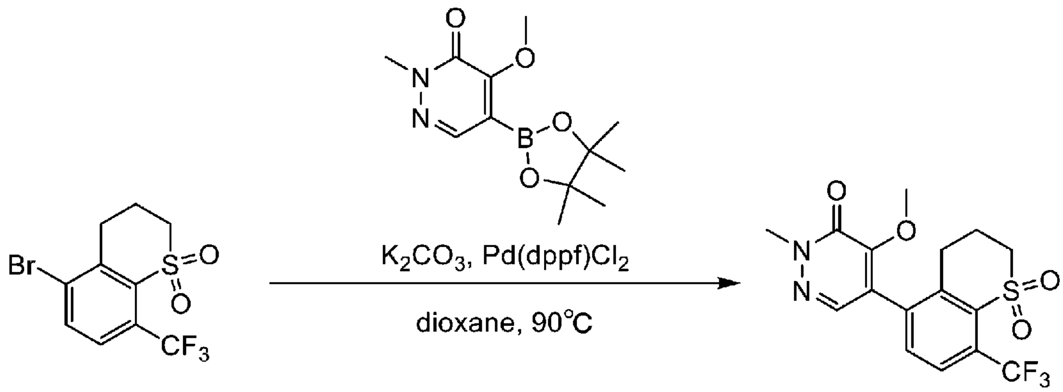


5-bromo-8-(trifluoromethyl)thiochroman 1,1-dioxide (0.36 g) was dissolved in dioxane (10 mL), and the resulting mixture was stirred at room temperature. 4-methoxy-2-methyl-5-(4,4,5,5-tetramethyl-1,3,2-dioxaborolan-2-yl)pyridazin-3(2H)-one (0.27 g), potassium carbonate (0.41 g) and [1,1'-bis(diphenylphosphino) ferrocene] palladium (11) dichloride-dichloromethane adduct (0.04 g) were sequentially added thereto, and the resulting mixture was stirred overnight at 90°C.

The obtained liquid was filtered. The filtrate was concentrated under reduced pressure. The obtained concentrate was purified by silica gel column chromatography to obtain 0.22 g of a target compound.

The NMR data of the obtained compound are shown.

$^1$H-NMR (400 MHz, $CDCl_3$): δ2.40-2.48 (m, 2H), 2.72-2.80 (m, 1H), 2.86-2.95 (m, 1H), 3.40 (t, 2H), 3.83 (s, 3H), 4.12 (s, 3H), 7.41 (d, 1H), 7.44 (s, 1H), 7.84 (d, 1H).

(Reference Example 3)

Synthesis of 5-bromo-8-(trifluoromethyl) thiochroman 1,1 -dioxide

(Step 1)

Synthesis of 3-(6-bromo-2-fluoro-3-(trifluoromethyl)phenyl) propionic acid

[Chemical Formula 16]

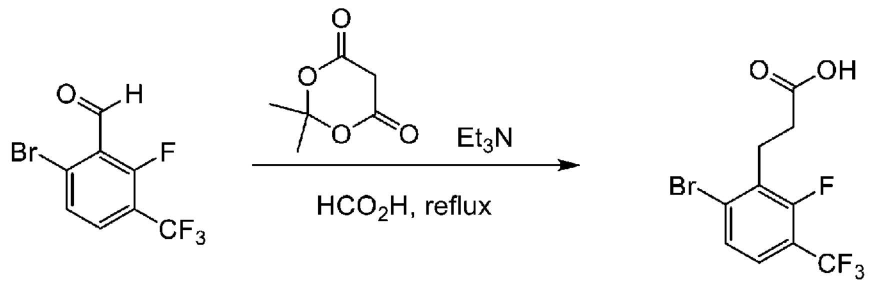


Formic acid (58.2 g), triethylamine (18.3 g), 6-bromo-2-fluoro-3-(trifluoromethyl) benzaldehyde (48.7 g) and Meldrum's acid (26.0 g) were sequentially added at 0°C into a 500 mL four-necked flask. Thereafter, the resulting mixture was heated under reflux for 4 hours.

Hydrochloric acid was added to the obtained liquid, and the precipitated solid substance was separated by filtration. The obtained solid substance was dried to obtain 53.8 g of a target compound.

(Step 2)

Synthesis of 3-(6-bromo-2-fluoro-3-(trifluoromethyl)phenyl) propan-1-ol

[Chemical Formula 17]

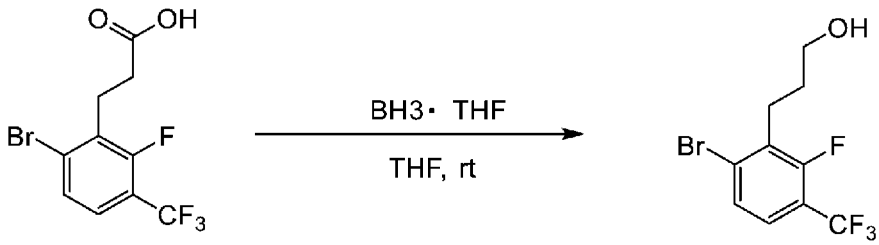


3-(6-bromo-2-fluoro-3-(trifluoromethyl)phenyl) propionic acid (30 g) was dissolved in tetrahydrofuran (191 mL), and the resulting mixture was stirred at room temperature. A borane-tetrahydrofuran complex (0.9M, 127 mL) was added thereto, and the resulting mixture was stirred at 0°C for 1 hour.

The obtained liquid was poured into hydrochloric acid and then extracted with ethyl acetate. The obtained organic layer was washed with saturated brine, dried over anhydrous magnesium sulfate, and filtered. The filtrate was concentrated under reduced pressure. The obtained concentrate was purified by silica gel column chromatography to obtain 28.9 g of a target compound.

(Step 3)

Synthesis of 1-bromo-2-(3-chloropropyl)-3-fluoro-4-(trifluoromethyl) benzene

[Chemical Formula 18]

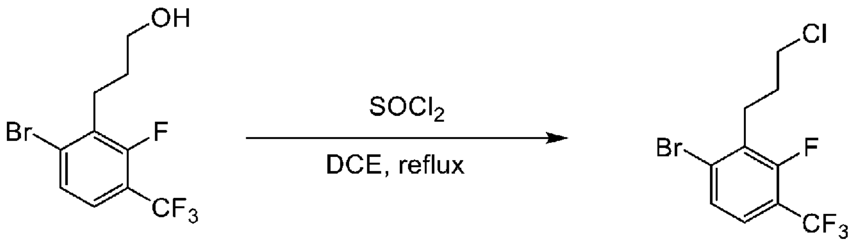


3-(6-bromo-2-fluoro-3-(trifluoromethyl)phenyl) propan-1-ol (15.3 g) was dissolved in dichloroethane (102 mL), and the resulting mixture was stirred at room temperature. Thionyl chloride (9.1 g) and N,N-dimethylformamide (0.2 g) were added thereto, and the resulting mixture was heated under reflux for 2 hours.

The obtained liquid was concentrated under reduced pressure. The obtained concentrate was purified by silica gel column chromatography to obtain 16.4 g of a target compound.

(Step 4)

Synthesis of 5-bromo-8-(trifluoromethyl) thiochroman

[Chemical Formula 19]

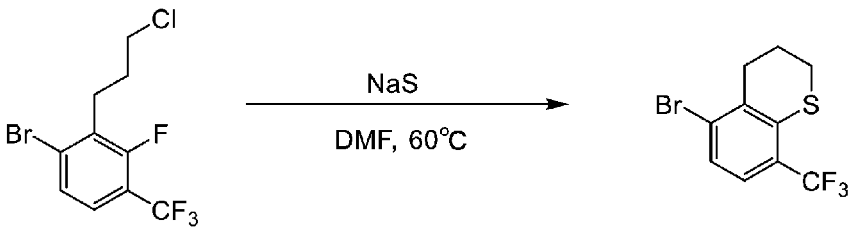


1-bromo-2-(3-chloropropyl)-3-fluoro-4-(trifluoromethyl) benzene (14.4 g) was dissolved in N,N-dimethylformamide (158 mL), and the resulting mixture was stirred at room temperature. Sodium sulfide (4.2 g) was added thereto, and the resulting mixture was heated under reflux at 60°C overnight.

The obtained liquid was poured into water and then extracted with ethyl acetate. The obtained organic layer was washed with saturated brine, dried over anhydrous magnesium sulfate, and filtered. The filtrate was concentrated under reduced pressure. The obtained concentrate was purified by silica gel column chromatography to obtain 6.8 g of a target compound.

(Step 5)

Synthesis of 5-bromo-8-(trifluoromethyl) thiochroman 1,1-dioxide

[Chemical Formula 20]

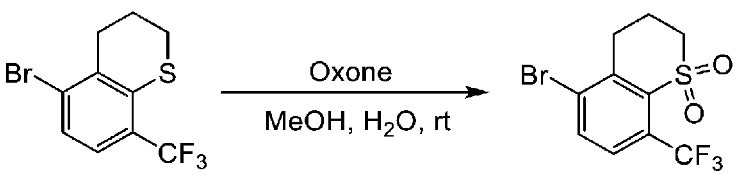

5-bromo-8-(trifluoromethyl) thiochroman (2.0 g) was dissolved in 27 mL of methanol and 7 mL of water, and the resulting mixture was stirred at room temperature. Oxone (8.3 g) was added thereto, and the resulting mixture was stirred at room temperature for 48 hours.

The obtained liquid was filtered. The filtrate was concentrated under reduced pressure. Water was poured thereinto, and then the resulting mixture was extracted with ethyl acetate. The obtained organic layer was washed with saturated brine, dried over anhydrous magnesium sulfate, and filtered. The filtrate was concentrated under reduced pressure. The obtained concentrate was purified by silica gel column chromatography to obtain 2.0 g of a target compound.

Examples will be described below in order to describe the present invention in more detail, but the present invention is not to be interpreted as limited thereto.

(Evaluation of herbicidal effects)

Herbicidal effects of the herbicidal composition of the present invention are shown in the following test examples.

(Test Example 1)

As the compound (I), 1-methoxy-3-methyl-6-(1,1-dioxido-8-(trifluoromethyl)thiochroman-5-yl)-7-oxa-3,4-diazabicyclo[4.1.0]hept-4-en-2-one (Compound (1-3)) was used.

As the compound (II), the compounds shown in Table 1 were used.

(1) Preparation of test emulsion

The compound (1) or compound (11) was prepared into a 5% emulsion using DMF (containing 1.5% Tween) and diluted with water to a prescribed dosage concentration. Commercially available preparations were dissolved in water and adjusted to a prescribed dosage concentration.

(2) Seed treatment

Seeds were soaked in 0.6% sodium hypochlorite for a predetermined time for surface sterilization and washed with water for use (seed disinfection). Seeds of Ambrosia artemisiifolia were used for the test.

Filter paper was placed on a cup (diameter: 10 cm, height: 4 cm) with a lid and moistened with 8 ml of chemical solution, and seeds were sown thereon, and after covering with a lid, grown in a constant temperature room.

(3) Evaluation

The herbicidal effects were visually evaluated, 6 days after the treatment, as the herbicidal effect (%), by comparing with a state of an untreated group using a total of 21 scores of withering index from 0 to 20 (0: mortality rate equivalent to that of the untreated group, 20: mortality rate of 100%).

In addition, the expected values of the herbicidal effects were calculated from the herbicidal effects in a case where the compound (1) alone was applied and the herbicidal effects in a case where the compound (II) alone was applied by using the Colby's formula (Colby, S. R., Calculating synergistic and antagonistic responses of herbicide combinations, Weeds, 15, pp. 20-22 (1967)).

It should be noted that the expected values calculated by the Colby's formula represent the herbicidal effects of the compound (I) test group and the additive effects of the compound (11) test group.

$$E = M + N - (M \times N / 100)$$

M indicates an herbicidal effect (%) in the application of the compound (1) alone, N indicates an herbicidal effect (%) in the application of the compound (11) alone, and E indicates an expected value (%) of the herbicidal effect in the combined application of the compound (I) and the compound (II). When the actual measured value (%) of the herbicidal effect in the combined application of the compound (1) and the compound (11) is greater than the expected value E, it can be regarded that the combined application of the compound (I) and the compound (II) has a synergistic effect. Table 1 shows the actual measured values and expected values of the herbicidal effects.

[Table 1]

Table 1

| Test Example 1-1 | | | | | | |
|---|---|---|---|---|---|---|
| Compound (I) | | Compound (II) | | Compound (I) + Compound (II) | | |
| Compound (I-3) | | Haloxyfop-methyl | | Compound (I-3) + Haloxyfop-methyl | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 60 | 12.5 | 10 | 0.2 + 12.5 | 80 | 64 |
| Test Example 1-2 | | | | | | |
| Compound (I) | | Compound (II) | | Compound (I) + Compound (II) | | |
| Compound (I-3) | | Clethodim | | Compound (I-3) + Clethodim | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 70 | 12.5 | 0 | 3.1 + 12.5 | 80 | 70 |
| Test Example 1-3 | | | | | | |
| Compound (I) | | Compound (II) | | Compound (I) + Compound (II) | | |
| Compound (I-3) | | Foramsulfuron | | Compound (I-3) + Foramsulfuron | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 65 | 0.8 | 65 | 3.1 + 0.8 | 90 | 88 |
| Test Example 1-4 | | | | | | |
| Compound (I) | | Compound (II) | | Compound (I) + Compound (II) | | |
| Compound (1-3) | | Rimsulfuron | | Compound (1-3) + Rimsulfuron | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 30 | 0.2 | 20 | 0.2 + 0.2 | 75 | 44 |
| Test Example 1-5 | | | | | | |
| Compound (1) | | Compound (11) | | Compound (1) + Compound (11) | | |
| Compound (I-3) | | Thiencarbazone-methyl | | Compound (1-3) + Thiencarbazone-methyl | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 60 | 0.8 | 30 | 0.2 + 0.8 | 80 | 72 |

[Table 2]

| Table 1 (continued) | | | | | | |
|---|---|---|---|---|---|---|
| Test Example 1-6 | | | | | | |
| Compound (I) | | Compound (II) | | Compound (I) + Compound (II) | | |
| Compound (I-3) | | Flumetsulam | | Compound (I-3) + Flumetsulam | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 70 | 12.5 | 40 | 3.1 + 12.5 | 85 | 82 |
| Test Example 1-7 | | | | | | |
| Compound (I) | | Compound (II) | | Compound (I) + Compound (II) | | |
| Compound (I-3) | | Pendimethalin | | Compound (I-3) + Pendimethalin | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.8 | 20 | 0.2 + 0.8 | 70 | 52 |
| Test Example 1-8 | | | | | | |
| Compound (I) | | Compound (II) | | Compound (I) + Compound (II) | | |
| Compound (I-3) | | Trifluralin | | Compound (I-3) + Trifluralin | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.8 | 10 | 0.2 + 0.8 | 75 | 46 |
| Test Example 1-9 | | | | | | |
| Compound (I) | | Compound (II) | | Compound (I) + Compound (II) | | |
| Compound (1-3) | | Dicamba | | Compound (I-3) + Dicamba | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 30 | 0.8 | 30 | 0.2 + 0.8 | 80 | 51 |
| Test Example 1-10 | | | | | | |
| Compound (I) | | Compound (II) | | Compound (I) + Compound (11) | | |
| Compound (I-3) | | 2,4-D | | Compound (I-3) + 2,4-D | | |
| Amount of active ingredient (ppm) | Herbicidal effect (%) | Amount of active ingredient (PPm) | Herbicidal effect (%) | Amount of active ingredient (PPm) | Actual measured value of herbicidal effect (%) | Expected value of herbicidal effect (%) |
| 0.2 | 40 | 0.8 | 50 | 0.2 + 0.8 | 90 | 70 |

[Table 3]

| Table 1 (continued) | | | | | | |
|---|---|---|---|---|---|---|
| Test Example 1-11 | | | | | | |
| Compound (I) | | Compound (II) | | Compound (I) + Compound (II) | | |
| Compound (I-3) | | 2,4-D 2-ethylhexyl ester | | Compound (I-3) + 2,4-D 2-ethylhexyl ester | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.8 | 50 | 0.2 + 0.8 | 90 | 70 |
| Test Example 1-12 | | | | | | |
| Compound (I) | | Compound (II) | | Compound (I) + Compound (II) | | |
| Compound (1-3) | | 2,4-D amine | | Compound (1-3) + 2,4-D amine | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 65 | 0.05 | 20 | 3.1 + 0.05 | 85 | 72 |
| Test Example 1-13 | | | | | | |
| Compound (1) | | Compound (11) | | Compound (1) + Compound (11) | | |
| Compound (I-3) | | MCPA | | Compound (I-3) + MCPA | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 65 | 0.2 | 30 | 3.1 + 0.2 | 85 | 76 |
| Test Example 1-14 | | | | | | |
| Compound (I) | | Compound (II) | | Compound (I) + Compound (II) | | |
| Compound (I-3) | | Clopyralid | | Compound (I-3) + Clopyralid | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 12.5 | 90 | 0.2 + 12.5 | 95 | 94 |
| Test Example 1-15 | | | | | | |
| Compound (I) | | Compound (II) | | Compound (I) + Compound (II) | | |
| Compound (I-3) | | Picloram | | Compound (I-3) + Picloram | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 55 | 0.8 | 70 | 0.2 + 0.8 | 90 | 86.5 |

[Table 4]

| Table 1 (continued) | | | | | | |
|---|---|---|---|---|---|---|
| Test Example 1-16 | | | | | | |
| Compound (I) | | Compound (II) | | Compound (I) + Compound (II) | | |
| Compound (I-3) | | Fluroxypyr | | Compound (I-3) + Fluroxypyr | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 55 | 0.8 | 40 | 0.2 + 0.8 | 75 | 73 |
| Test Example 1-17 | | | | | | |
| Compound (I) | | Compound (II) | | Compound (I) + Compound (II) | | |
| Compound (I-3) | | Atrazine | | Compound (I-3) + Atrazine | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 70 | 200 | 10 | 3.1 + 200 | 85 | 73 |
| Test Example 1-18 | | | | | | |
| Compound (I) | | Compound (II) | | Compound (I) + Compound (II) | | |
| Compound (I-3) | | Simazine | | Compound (I-3) + Simazine | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 70 | 50 | 30 | 3.1 + 50 | 85 | 79 |
| Test Example 1-19 | | | | | | |
| Compound (I) | | Compound (II) | | Compound (I) + Compound (II) | | |
| Compound (I-3) | | Terbuthylazine | | Compound (I-3) + Terbuthylazine | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 50 | 0 | 0.2 + 50 | 85 | 40 |
| Test Example 1 -20 | | | | | | |
| Compound (I) | | Compound (II) | | Compound (I) + Compound (II) | | |
| Compound (I-3) | | Metribuzin | | Compound (I-3) + Metribuzin | | |
| Amount of active ingredient (PPm) | Herbicidal effect (%) | Amount of active ingredient (PPm) | Herbicidal effect (%) | Amount of active ingredient (PPm) | Actual measured value of herbicidal effect (%) | Expected value of herbicidal effect (%) |
| 3.1 | 70 | 50 | 0 | 3.1 + 50 | 75 | 70 |

[Table 5]

| Table 1 (continued) | | | | | | |
|---|---|---|---|---|---|---|
| Test Example 1-21 | | | | | | |
| Compound (I) | | Compound (II) | | Compound (I) + Compound (II) | | |
| Compound (I-3) | | Amicarbazone | | Compound (I-3) + Amicarbazone | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 50 | 0 | 0.2 + 50 | 70 | 40 |
| Test Example 1-22 | | | | | | |
| Compound (I) | | Compound (II) | | Compound (I) + Compound (II) | | |
| Compound (I-3) | | Chlorotoluron | | Compound (I-3) + Chlorotoluron | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 50 | 40 | 0.2 + 50 | 75 | 64 |
| Test Example 1-23 | | | | | | |
| Compound (I) | | Compound (II) | | Compound (I) + Compound (II) | | |
| Compound (I-3) | | Bentazon | | Compound (I-3) + Bentazon | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 70 | 200 | 20 | 3.1 + 200 | 80 | 76 |
| Test Example 1-24 | | | | | | |
| Compound (I) | | Compound (II) | | Compound (I) + Compound (II) | | |
| Compound (I-3) | | Bromoxynil | | Compound (I-3) + Bromoxynil | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 60 | 3.1 | 0 | 0.2 + 3.1 | 70 | 60 |
| Test Example 1-25 | | | | | | |
| Compound (I) | | Compound (II) | | Compound (I) + Compound (II) | | |
| Compound (I-3) | | Glyphosate | | Compound (I-3) + Glyphosate | | |
| Amount of active ingredient (ppm) | Herbicidal effect (%) | Amount of active ingredient (PPm) | Herbicidal effect (%) | Amount of active ingredient (PPm) | Actual measured value of herbicidal effect (%) | Expected value of herbicidal effect (%) |
| 0.2 | 30 | 12.5 | 20 | 0.2 + 12.5 | 75 | 44 |

[Table 6]

| Table 1 (continued) | | | | | | |
|---|---|---|---|---|---|---|
| Test Example 1-26 | | | | | | |
| Compound (I) | | Compound (II) | | Compound (I) + Compound (II) | | |
| Compound (I-3) | | Glufosinate-ammonium | | Compound (I-3) + Glufosinate-ammonium | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 12.5 | 20 | 0.2 + 12.5 | 70 | 52 |
| Test Example 1-27 | | | | | | |
| Compound (I) | | Compound (II) | | Compound (I) + Compound (II) | | |
| Compound (I-3) | | Picolinafen | | Compound (I-3) + Picolinafen | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 3.1 | 30 | 0.2 + 3.1 | 70 | 58 |
| Test Example 1-28 | | | | | | |
| Compound (I) | | Compound (II) | | Compound (I) + Compound (II) | | |
| Compound (I-3) | | Clomazone | | Compound (I-3) + Clomazone | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.2 | 10 | 0.2 + 0.2 | 75 | 46 |
| Test Example 1-29 | | | | | | |
| Compound (I) | | Compound (II) | | Compound (I) + Compound (II) | | |
| Compound (I-3) | | Flumioxazin | | Compound (I-3) + Flumioxazin | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 70 | 0.05 | 80 | 3.1 + 0.05 | 100 | 94 |
| Test Example 1-30 | | | | | | |
| Compound (I) | | Compound (II) | | Compound (I) + Compound (II) | | |
| Compound (I-3) | | Saflufenacil | | Compound (I-3) + Saflufenacil | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.0125 | 60 | 0.2 + 0.0125 | 85 | 76 |

[Table 7]

| Table 1 (continued) | | | | | | |
|---|---|---|---|---|---|---|
| Test Example 1-31 | | | | | | |
| Compound (I) | | Compound (II) | | Compound (I) + Compound (II) | | |
| Compound (I-3) | | Carfentrazone-ethyl | | Compound (I-3) + Carfentrazone-ethyl | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 55 | 0.8 | 50 | 0.2 + 0.8 | 85 | 77.5 |
| Test Example 1-32 | | | | | | |
| Compound (I) | | Compound (II) | | Compound (I) + Compound (II) | | |
| Compound (I-3) | | Pyroxasulfone | | Compound (I-3) + Pyroxasulfone | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 50 | 0.2 | 30 | 0.2 + 0.2 | 80 | 65 |
| Test Example 1-33 | | | | | | |
| Compound (I) | | Compound (II) | | Compound (I) + Compound (II) | | |
| Compound (I-3) | | Prosulfocarb | | Compound (I-3) + Prosulfocarb | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.8 | 20 | 0.2 + 0.8 | 70 | 52 |
| Test Example 1-34 | | | | | | |
| Compound (I) | | Compound (II) | | Compound (I) + Compound (II) | | |
| Compound (I-3) | | Tri-allate | | Compound (I-3) + Tri-allate | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 55 | 12.5 | 20 | 0.2 + 12.5 | 75 | 64 |
| Test Example 1 -35 | | | | | | |
| Compound (I) | | Compound (11) | | Compound (1) + Compound (11) | | |
| Compound (I-3) | | Acetochlor | | Compound (1-3) + Acetochlor | | |
| Amount of active ingredient (ppm) | Herbicidal effect (%) | Amount of active ingredient (PPm) | Herbicidal effect (%) | Amount of active ingredient (PPm) | Actual measured value of herbicidal effect (%) | Expected value of herbicidal effect (%) |
| 0.2 | 40 | 0.8 | 40 | 0.2 + 0.8 | 85 | 64 |

[Table 8]

| Table 1 (continued) | | | | | | |
|---|---|---|---|---|---|---|
| Test Example 1-36 | | | | | | |
| Compound (I) | | Compound (II) | | Compound (I) + Compound (11) | | |
| Compound (I-3) | | Alachlor | | Compound (I-3) + Alachlor | | |
| Amount of active ingredient (ppm) | Herbicidal effect (%) | Amount of active ingredient (PPm) | Herbicidal effect (%) | Amount of active ingredient (PPm) | Actual measured value of herbicidal effect (%) | Expected value of herbicidal effect (%) |
| 0.2 | 40 | 0.8 | 20 | 0.2 + 0.8 | 80 | 52 |
| Test Example 1-37 | | | | | | |
| Compound (I) | | Compound (II) | | Compound (I) + Compound (II) | | |
| Compound (I-3) | | Dimethenamid-P | | Compound (I-3) + Dimethenamid-P | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.8 | 30 | 0.2 + 0.8 | 85 | 58 |
| Test Example 1-38 | | | | | | |
| Compound (I) | | Compound (II) | | Compound (I) + Compound (II) | | |
| Compound (I-3) | | Metolachlor | | Compound (I-3) + Metolachlor | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 70 | 0.8 | 10 | 3.1 + 0.8 | 85 | 73 |
| Test Example 1-39 | | | | | | |
| Compound (I) | | Compound (II) | | Compound (I) + Compound (II) | | |
| Compound (I-3) | | S-metolachlor | | Compound (I-3) + S-metolachlor | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 50 | 0.8 | 20 | 0.2 + 0.8 | 75 | 60 |
| Test Example 1-40 | | | | | | |
| Compound (I) | | Compound (II) | | Compound (I) + Compound (II) | | |
| Compound (I-3) | | Flufenacet | | Compound (I-3) + Flufenacet | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 70 | 0.2 | 20 | 3.1 + 0.2 | 85 | 76 |

[Table 9]

| Table 1 (continued) | | | | | | |
|---|---|---|---|---|---|---|
| Test Example 1-41 | | | | | | |
| Compound (I) | | Compound (II) | | Compound (I) + Compound (II) | | |
| Compound (I-3) | | Asulam | | Compound (I-3) + Asulam | | |
| Amount of active ingredient (ppm) | Herbicidal effect (%) | Amount of active ingredient (PPm) | Herbicidal effect (%) | Amount of active ingredient (PPm) | Actual measured value of herbicidal effect (%) | Expected value of herbicidal effect (%) |
| 0.2 | 40 | 3.1 | 20 | 0.2 + 3.1 | 70 | 52 |
| Test Example 1-42 | | | | | | |
| Compound (I) | | Compound (II) | | Compound (I) + Compound (II) | | |
| Compound (I-3) | | Diflufenzopyr-sodium | | Compound (I-3) + Diflufenzopyr-sodium | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 55 | 12.5 | 20 | 0.2 + 12.5 | 80 | 64 |
| Test Example 1-43 | | | | | | |
| Compound (I) | | Compound (II) | | Compound (I) + Compound (II) | | |
| Compound (I-3) | | Diquat | | Compound (I-3) + Diquat | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 50 | 0.2 | 30 | 0.2 + 0.2 | 90 | 65 |
| Test Example 1-44 | | | | | | |
| Compound (I) | | Compound (II) | | Compound (I) + Compound (II) | | |
| Compound (I-3) | | Mesotrione | | Compound (I-3) + Mesotrione | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 30 | 0.2 | 50 | 0.2 + 0.2 | 85 | 65 |
| Test Example 1-45 | | | | | | |
| Compound (I) | | Compound (II) | | Compound (I) + Compound (II) | | |
| Compound (I-3) | | Isoxaben | | Compound (I-3) + Isoxaben | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.2 | 75 | 0.2 + 0.2 | 90 | 85 |

[Table 10]

| Table 1 (continued) | | | | | | |
|---|---|---|---|---|---|---|
| Test Example 1-46 | | | | | | |
| Compound (I) | | Compound (II) | | Compound (I) + Compound (II) | | |
| Compound (I-3) | | Cinmethylin | | Compound (I-3) + Cinmethylin | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 3.1 | 50 | 0.2 + 3.1 | 75 | 70 |
| Test Example 1-47 | | | | | | |
| Compound (I) | | Compound (II) | | Compound (I) + Compound (II) | | |
| Compound (I-3) | | Aclonifen | | Compound (I-3) + Aclonifen | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 50 | 50 | 20 | 0.2 + 50 | 80 | 60 |
| Test Example 1 -48 | | | | | | |
| Compound (I) | | Compound (II) | | Compound (I) + Compound (II) | | |
| Compound (I-3) | | Cyclopyrimorate | | Compound (I-3) + Cyclopyrimorate | | |
| Amount of active ingredient (ppm) | Herbicidal effect (%) | Amount of active ingredient (PPm) | Herbicidal effect (%) | Amount of active ingredient (PPm) | Actual measured value of herbicidal effect (%) | Expected value of herbicidal effect (%) |
| 0.2 | 40 | 12.5 | 40 | 0.2 + 12.5 | 80 | 64 |
| Test Example 1-49 | | | | | | |
| Compound (I) | | Compound (II) | | Compound (I) + Compound (II) | | |
| Compound (I-3) | | Amitrole | | Compound (I-3) + Amitrole | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 3.1 | 20 | 0.2 + 3.1 | 60 | 52 |
| Test Example 1-50 | | | | | | |
| Compound (I) | | Compound (II) | | Compound (I) + Compound (II) | | |
| Compound (I-3) | | Tetflupyrolimet | | Compound (I-3) + Tetflupyrolimet | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 3.1 | 70 | 0.2 + 3.1 | 90 | 82 |

[Table 11]

| Table 1 (continued) | | | | | | |
|---|---|---|---|---|---|---|
| Test Example 1-51 | | | | | | |
| Compound (I) | | Compound (II) | | Compound (I) + Compound (II) | | |
| Compound (I-3) | | Epyrifenacil | | Compound (I-3) + Epyrifenacil | | |
| Amount of active ingredient (PPm) | Herbicidal effect (%) | Amount of active ingredient (PPm) | Herbicidal effect (%) | Amount of active ingredient (PPm) | Actual measured value of herbicidal effect (%) | Expected value of herbicidal effect (%) |
| 0.2 | 40 | 0.0125 | 80 | 0.2 + 0.0125 | 90 | 88 |
| Test Example 1-52 | | | | | | |
| Compound (I) | | Compound (II) | | Compound (I) + Compound (II) | | |
| Compound (I-3) | | Isoxaflutole | | Compound (I-3) + Isoxaflutole | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.0125 | 40 | 0.2 + 0.0125 | 75 | 64 |
| Test Example 1-53 | | | | | | |
| Compound (I) | | Compound (II) | | Compound (I) + Compound (II) | | |
| Compound (I-3) | | Sethoxydim | | Compound (I-3) + Sethoxydim | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.8 | 0 | 0.2 + 0.8 | 75 | 40 |
| Test Example 1-54 | | | | | | |
| Compound (I) | | Compound (II) | | Compound (I) + Compound (II) | | |
| Compound (I-3) | | Tepraloxydim | | Compound (I-3) + Tepraloxydim | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 3.1 | 10 | 0.2 + 3.1 | 60 | 46 |

[Table 12]

| Table 1 (continued) | | | | | | |
|---|---|---|---|---|---|---|
| Test Example 1-55 | | | | | | |
| Compound (I) | | Compound (II) | | Compound (I) + Compound (II) | | |
| Compound (I-3) | | Nicosulfuron | | Compound (I-3) + Nicosulfuron | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.8 | 60 | 0.2 + 0.8 | 85 | 76 |
| Test Example 1-56 | | | | | | |
| Compound (I) | | Compound (II) | | Compound (I) + Compound (II) | | |
| Compound (I-3) | | Halauxifen-methyl | | Compound (I-3) + Halauxifen-methyl | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.012 | 70 | 0.2 + 0.012 | 90 | 82 |

[Table 13]

| Table 1 (continued) | | | | | | |
|---|---|---|---|---|---|---|
| Test Example 1-57 | | | | | | |
| Compound (I) | | Compound (II) | | Compound (I) + Compound (II) | | |
| Compound (I-3) | | Hexazinone | | Compound (I-3) + Hexazinone | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 3.1 | 10 | 0.2 + 3.1 | 70 | 46 |
| Test Example 1-58 | | | | | | |
| Compound (I) | | Compound (II) | | Compound (I) + Compound (II) | | |
| Compound (I-3) | | Tebuthiuron | | Compound (I-3) + Tebuthiuron | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 50 | 20 | 0.2 + 50 | 65 | 52 |

(continued)

| Test Example 1-59 | | | | | | |
|---|---|---|---|---|---|---|
| Compound (I) | | Compound (II) | | Compound (I) + Compound (II) | | |
| Compound (I-3) | | Topramezone | | Compound (I-3) + Topramezone | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.2 | 40 | 0.2 + 0.2 | 75 | 64 |
| Test Example 1-60 | | | | | | |
| Compound (I) | | Compound (II) | | Compound (I) + Compound (II) | | |
| Compound (I-3) | | Flupoxam | | Compound (I-3) + Flupoxam | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.012 | 65 | 0.2 + 0.012 | 95 | 79 |

[Table 14]

| Table 1 (continued) | | | | | | |
|---|---|---|---|---|---|---|
| Test Example 1-61 | | | | | | |
| Compound (I) | | Compound (II) | | Compound (I) + Compound (II) | | |
| Compound (I-3) | | Halosulfuron-methyl | | Compound (I-3) + Halosulfuron-methyl | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 65 | 0.05 | 30 | 3.1 + 0.05 | 85 | 76 |
| Test Example 1-62 | | | | | | |
| Compound (I) | | Compound (II) | | Compound (I) + Compound (II) | | |
| Compound (I-3) | | Sulfentrazone | | Compound (I-3) + Sulfentrazone | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 65 | 0.012 | 0 | 3.1 + 0.012 | 85 | 65 |

[Table 15]

| Table 1 (continued) | | | | | | |
|---|---|---|---|---|---|---|
| Test Example 1-63 | | | | | | |
| Compound (I) | | Compound (II) | | Compound (I) + Compound (II) | | |
| Compound (I-3) | | Rimisoxafen | | Compound (I-3) + Rimisoxafen | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.2 | 25 | 0.2 + 0.2 | 80 | 55 |
| Test Example 1-64 | | | | | | |
| Compound (I) | | Compound (II) | | Compound (I) + Compound (II) | | |
| Compound (I-3) | | Linuron | | Compound (I-3) + Linuron | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 12.5 | 10 | 0.2 + 12.5 | 70 | 46 |
| Test Example 1-65 | | | | | | |
| Compound (I) | | Compound (II) | | Compound (I) + Compound (II) | | |
| Compound (I-3) | | Diflufenican | | Compound (I-3) + Diflufenican | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 40 | 0.2 | 10 | 0.2 + 0.2 | 70 | 46 |

(Test Example 2)

As the compound (I), 1-methoxy-3-methyl-6-(1,1-dioxido-8-(trifluoromethyl)thiochroman-5-yl)-7-oxa-3,4-diazabicyclo[4.1.0]hept-4-en-2-one (Compound (1-3)) was used.

As the compound (II), the compound shown in Table 2 was used.

The herbicidal effects were evaluated by the same method as in Test Example 1 except that the seeds used in the test were changed from Ambrosia artemisiifolia to Digitaria ciliaris. Table 2 shows the actual measured values and expected values of the herbicidal effects.

[Table 16]

| Table 2 | | | | | | |
|---|---|---|---|---|---|---|
| Test Example 2 | | | | | | |
| Compound (I) | | Compound (II) | | Compound (I) + Compound (II) | | |
| Compound (I-3) | | Pinoxaden | | Compound (I-3) + Pinoxaden | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 75 | 0.2 | 10 | 0.2 + 0.2 | 80 | 77.5 |

(Test Example 3)

As the compound (1), 1-methoxy-3-methyl-6-(1,1-dioxido-8-(trifluoromethyl)thiochroman-5-yl)-7-oxa-3,4-diazabicyclo[4.1.0]hept-4-en-2-one (Compound (1-3)) was used.
As the compound (11), the compounds shown in Table 3 were used.
The herbicidal effects were evaluated by the same method as in Test Example 1 except that the seeds used in the test were changed from Ambrosia artemisiifolia to Abutilon theophrasti. Table 3 shows the actual measured values and expected values of the herbicidal effects.

[Table 17]

| Table 3 | | | | | | |
|---|---|---|---|---|---|---|
| Test Example 3-1 | | | | | | |
| Compound (I) | | Compound (II) | | Compound (I) + Compound (II) | | |
| Compound (I-3) | | Thifensulfuron-methyl | | Compound (I-3) + Thifensulfuron-methyl | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 3.1 | 75 | 0.8 | 10 | 3.1 + 0.8 | 90 | 77.5 |
| Test Example 3-2 | | | | | | |
| Compound (I) | | Compound (II) | | Compound (I) + Compound (II) | | |
| Compound (I-3) | | Flucarbazone-Sodium | | Compound (I-3) + Flucarbazone-Sodium | | |
| Amount of active ingredient (ppm) | Herbicidal effect (%) | Amount of active ingredient (ppm) | Herbicidal effect (%) | Amount of active ingredient (ppm) | Actual measured value of herbicidal effect (%) | Expected value of herbicidal effect (%) |
| 0.2 | 75 | 3.1 | 20 | 0.2 + 3.1 | 85 | 80 |

As shown in Table 1, Table 2 and Table 3, synergistic effects of herbicidal effects were observed in all the test plots.

(Test Example 4)

(1) Preparation of test emulsion

POA allylphenyl ether (4.1 parts by weight), POE-POP glycol (1 part by weight), POE sorbitan laurate (0.8 parts by weight), glycerin (2.6 parts by weight), dimethylformamide (65.9 parts by weight), N-methylpyrrolidone (5.1 parts by weight), cyclohexanone (15.4 parts by weight), and aromatic hydrocarbons (5.1 parts by weight) were mixed and dissolved to prepare an emulsion. The active ingredient (4 mg) of the composition of the present invention was dissolved in this emulsion (100 μL) to prepare a test emulsion. It should be noted that POA means "polyoxyalkylene", POE means "polyoxyethylene", and POP means "polyoxypropylene".
As the compound (1), 1-methoxy-3-methyl-6-(1,1-dioxido-8-(trifluoromethyl)thiochroman-5-yl)-7-oxa-3,4-diazabicyclo[4.1.0]hept-4-en-2-one (Compound (1-3)) was used.
Acetochlor or atrazine was used as the compound (11).

(2) Foliar spraying treatment

A 300 $cm^2$ pot was filled with soil, and seeds of Zea mays, Setaria faberi, Sorghum halepense, Brachiaria platyphylla, Amaranthus palmeri, Senna obtusifolia and Ipomoea hederacea were sown into the surface layer, and then grown in a greenhouse after being covered lightly with soil. When each plant grew to a plant height of 7 to 11 cm, it was used for the test. The test emulsion was diluted so that the amount of the active ingredient became a predetermined amount, and sprayed on the foliage with a small sprayer at a spray water volume of 250 L per hectare.

(3) Evaluation

For the evaluation of the herbicidal effects, the above ground weights of weeds in the untreated and treated areas were measured for each weed 3 weeks after spraying treatment, and the herbicidal effect (%) was calculated by the following calculation formula.

In addition, the expected values of the herbicidal effects were calculated from the herbicidal effects in a case where the compound (I) alone was applied and the herbicidal effects in a case where the compound (11) alone was applied by using the Colby's formula (Colby, S. R., Calculating synergistic and antagonistic responses of herbicide combinations, Weeds, 15, pp. 20-22 (1967)).

It should be noted that the expected values calculated by the Colby's formula represent the herbicidal effects of the compound (I) test group and the additive effects of the compound (II) test group.

$$E = M + N - (M \times N / 100)$$

M indicates an herbicidal effect (%) in the application of the compound (1) alone, N indicates an herbicidal effect (%) in the application of the compound (II) alone, and E indicates an expected value (%) of the herbicidal effect in the combined application of the compound (I) and the compound (II). When the actual measured value (%) of the herbicidal effect in the combined application of the compound (I) and the compound (II) is greater than the expected value E, it can be regarded that the combined application of the compound (1) and the compound (II) has a synergistic effect. Table 4 shows the actual measured values and expected values of the herbicidal effects.

(4) Calculation formula for herbicidal effects

$$\text{Herbicidal effect (\%)} = [(\text{above ground weight of weeds in untreated area}) - (\text{above ground weight of weeds in treated area}) / (\text{above ground weight of weeds in untreated area})] \times 100$$

The following plants were used as useful plants [scientific names].
Corn for animal feed [Zea mays]

The following grass species were used as grass species to be controlled [scientific names].

Giant foxtail [Setaria faberi]
Johnson grass [Sorghum halepense]
Broadleaf signalgrass [Brachiaria platyphylla]
Palmer amaranth [Amaranthus palmeri]
Sicklepod [Senna obtusifolia]
Morning glory [Ipomoea hederacea]

[Table 18]

| Table 4 | | | | |
|---|---|---|---|---|
| Test Example 4-1 | | | | |
| Scientific name | Actual measured value of herbicidal effect (%) | | | Expected value of herbicidal effect (%) |
| | Compound (I) | Compound (II) | Compound (I) + Compound (II) | |
| | Compound (I-3) 63 gai/ha | Acetochlor 1,000 gai/ha | Compound (I-3) + Acetochlor 63 + 1,000 gai/ha | |
| Zea mays | 0 | 0 | 0 | 0 |

(continued)

| Table 4 | | | | |
|---|---|---|---|---|
| Test Example 4-1 | | | | |
| Scientific name | Actual measured value of herbicidal effect (%) | | | Expected value of herbicidal effect (%) |
| | Compound (I) | Compound (II) | Compound (I) + Compound (II) | |
| | Compound (I-3) 63 gai/ha | Acetochlor 1,000 gai/ha | Compound (I-3) + Acetochlor 63 + 1,000 gai/ha | |
| Setaria faberi | 80 | 70 | 100 | 91 |
| Sorghum halepense | 80 | 60 | 100 | 92 |
| Brachiaria platyphylla | 80 | 60 | 100 | 92 |
| Amaranthus palmeri | 100 | 50 | 100 | 100 |
| Senna obtusifolia | 60 | 20 | 80 | 68 |
| Ipomoea hederacea | 70 | 20 | 100 | 73 |
| Test Example 4-2 | | | | |
| Scientific name | Actual measured value of herbicidal effect (%) | | | Expected value of herbicidal effect (%) |
| | Compound (I) | Compound (II) | Compound (I) + Compound (II) | |
| | Compound (1-3) 63 gai/ha | Atrazine 500 gai/ha | Compound (1-3) + Atrazine 63 + 500 gai/ha | |
| Zea mays | 0 | 0 | 0 | 0 |
| Setaria faberi | 80 | 100 | 100 | 100 |
| Sorghum halepense | 80 | 0 | 100 | 80 |
| Brachiaria platyphylla | 80 | 0 | 100 | 80 |
| Amaranthus palmeri | 100 | 100 | 100 | 100 |
| Senna obtusifolia | 60 | 30 | 100 | 72 |
| Ipomoea hederacea | 70 | 100 | 100 | 100 |

As shown in Table 4, there was no effect on corn for animal feed. On the other hand, synergistic effects were observed on the herbicidal effects against the grass species to be controlled.

(Test Example 5)

(1) Preparation of test emulsion

A test emulsion was prepared in the same manner as in Test Example 4.

As the compound (I), 1-methoxy-3-methyl-6-(1,1-dioxido-8-(trifluoromethyl)thiochroman-5-yl)-7-oxa-3,4-diazabicyclo[4.1.0]hept-4-en-2-one (Compound (1-3)) was used.
Flufenacet was used as the compound (II).

(2) Foliar spraying treatment

A 300 $cm^2$ pot was filled with soil, and seeds of Triticum aestivum, multidrug-resistant Alopecurus myosuroides, Lolium multiflorum and Avena fatua were sown into the surface layer, and covered with soil to a thickness of 0.5 to 1 cm. The above test emulsion was diluted so that the amount of the active ingredient became a predetermined amount, and sprayed on the soil surface at a spray water volume of 250 L per hectare, followed by growth in an outdoor environment.

(3) Evaluation

Seven weeks after spraying, the evaluation was carried out in the same manner as in Test Example 4, except that the above ground weights of weeds in the untreated and treated areas were measured for each weed. The results are shown in Table 5.
The following plants were used as useful plants [scientific names].

Wheat [Triticum aestivum]

The following grass species were used as grass species to be controlled [scientific names].

Blackgrass * [Alopecurus myosuroides]
Italian ryegrass [Lolium multiflorum]
Wild oat [Avena fatua]

[Table 19]

| Table 5 | | | | |
|---|---|---|---|---|
| Test Example 5-1 | | | | |
| Scientific name | Actual measured value of herbicidal effect (%) | | | Expected value of herbicidal effect (%) |
| | Compound (I) | Compound (II) | Compound (I) + Compound (II) | |
| | Compound (1-3) 125 gai/ha | Flufenacet 250 gai/ha | Compound (1-3) + Flufenacet 125 + 250 gai/ha | |
| Triticum aestivum | 0 | 30 | 30 | 30 |
| Alopecurus myosuroides* | 30 | 40 | 80 | 58 |
| Lolium multiflorum | 80 | 70 | 100 | 94 |
| Avena fatua | 20 | 60 | 90 | 68 |
| *multidrug-resistant strain | | | | |
| Test Example 5-2 | | | | |
| Scientific name | Actual measured value of herbicidal effect (%) | | | Expected value of herbicidal effect (%) |
| | Compound (I) | Compound (II) | Compound (I) + Compound (II) | |
| | Compound (I-3) 63 gai/ha | Flufenacet 250 gai/ha | Compound (I-3) + Flufenacet 63 + 250 gai/ha | |
| Triticum aestivum | 0 | 30 | 30 | 30 |
| Alopecurus myosuroides* | 0 | 40 | 80 | 40 |
| Lolium multiflorum | 60 | 70 | 100 | 88 |

(continued)

| Test Example 5-2 | | | | |
|---|---|---|---|---|
| Scientific name | Actual measured value of herbicidal effect (%) | | | Expected value of herbicidal effect (%) |
| | Compound (I) | Compound (II) | Compound (I) + Compound (II) | |
| | Compound (I-3) 63 gai/ha | Flufenacet 250 gai/ha | Compound (I-3) + Flufenacet 63 + 250 gai/ha | |
| Avena fatua | 0 | 60 | 80 | 60 |
| *multidrug-resistant strain | | | | |

As shown in Table 5, there was a slight effect on wheat, but it was within the permissible range. On the other hand, synergistic effects were observed on the herbicidal effects against the grass species to be controlled.

(Test Example 6)

(1) Preparation of test emulsion

A test emulsion was prepared in the same manner as in Test Example 4.
As the compound (1), 1-methoxy-3-methyl-6-(1,1-dioxido-8-(trifluoromethyl)thiochroman-5-yl)-7-oxa-3,4-diazabicyclo[4.1.0]hept-4-en-2-one (Compound (1-3)) was used.
Acetochlor, cropyralid or pyroxasulfone was used as the compound (11).

(2) Foliar spraying treatment

A 300 $cm^2$ pot was filled with soil, and seeds of Zea mays and Ipomoea hederacea were sown into the surface layer, and then grown in a greenhouse after being covered lightly with soil. When each plant grew to a plant height of 7 to 9 cm, the above test emulsion was diluted so that the amount of the active ingredient became a predetermined amount, and sprayed on the foliage with a small sprayer at a spray water volume of 250 L per hectare.

(3) Evaluation

Test Examples 6-1 and 6-3 were evaluated in the same manner as in Test Example 4.
The expected values of the herbicidal effects in Test Example 6-2 were calculated using the following Colby's formula (Colby, S. R., Calculating synergistic and antagonistic responses of herbicide combinations, Weeds, 15, pp. 20-22 (1967)).

[Equation 1]

$$E = X + Y + Z - \frac{X \cdot Y}{100} - \frac{X \cdot Z}{100} - \frac{Y \cdot Z}{100} + \frac{X \cdot Y \cdot Z}{100 \cdot 100}$$

X indicates an herbicidal effect (%) by applying the compound (1) alone, Y and Z each indicate an herbicidal effect (%) by applying one of the two types of the compounds (II) alone, and E indicates an expected value (%) of the herbicidal effect by applying combinations of the compound (1) and two types of the compounds (11).
When the actual measured value (%) of the herbicidal effect by the combined application of the compound (I) and two types of the compounds (II) is greater than the expected value E, it can be regarded that the combined application of the compound (1) and two types of the compounds (II) has a synergistic effect. The results are shown in Table 6.
The following plants were used as useful plants [scientific names].
Corn for animal feed [Zea mays]
The following grass species were used as grass species to be controlled [scientific names].
Morning glory [Ipomoea hederacea]

[Table 20]

| Table 6 | | | | |
|---|---|---|---|---|
| Test Example 6-1 | | | | |
| Scientific name | Actual measured value of herbicidal effect (%) | | | Expected value of herbicidal effect (%) |
| | Compound (I) | Compound (II) | Compound (I) + Compound (11) | |
| | Compound (I-3) 125 gai/ha | Acetochlor 2,000 gai/ha | Compound (I-3) + Acetochlor 125 + 2,000 gai/ha | |
| Zea mays | 0 | 0 | 0 | 0 |
| Ipomoea hederacea | 60 | 20 | 80 | 68 |

[Table 21]

| Table 6 (continued) | | | | | |
|---|---|---|---|---|---|
| Test Example 6-2 | | | | | |
| Scientific name | Actual measured value of herbicidal effect (%) | | | | Expected value of herbicidal effect (%) |
| | Compound (I) | Compound (II) | Compound (II) | Compound (1) + Compound (II) + Compound (II) | |
| | Compound (I-3) 125 gai/ha | Acetochlor 2,000 gai/ha | Clopyralid 125 gai/ha | Compound (I-3) + Acetochlor + Clopyralid 125 + 2,000 + 125 gai/ha | |
| Zea mays | 0 | 0 | 0 | 0 | 0 |
| Ipomoea hederacea | 60 | 20 | 30 | 95 | 77.6 |

[Table 22]

| Table 6 (continued) | | | | |
|---|---|---|---|---|
| Test Example 6-3 | | | | |
| Scientific name | Actual measured value of herbicidal effect (%) | | | Expected value of herbicidal effect (%) |
| | Compound (I) | Compound (II) | Compound (I) + Compound (II) | |
| | Compound (I-3) 94 gai/ha | Pyroxasulfone 94 gai/ha | Compound (I-3) + Pyroxasulfone 94 + 94 gai/ha | |
| Zea mays | 0 | 0 | 0 | 0 |
| Ipomoea hederacea | 80 | 60 | 100 | 92 |

Since all of those randomly selected from among the compositions of the present invention exert the above-mentioned effects, it can be understood that the compositions of the present invention including the compositions that are not exemplified are compositions having high herbicidal effects with low phytotoxicity.

## Claims

1. A herbicidal composition comprising:

at least one compound (I) selected from a compound represented by a formula (I) or a salt thereof, and at least one compound (II) having herbicidal activity,

[Chemical Formula 1]

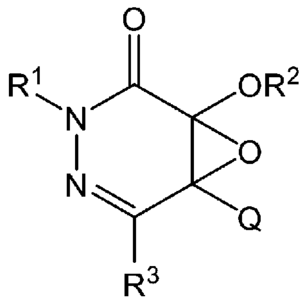

(I)

wherein
$R^1$ represents a substituted or unsubstituted $C_{1-6}$ alkyl group, a substituted or unsubstituted $C_{2-6}$ alkenyl group, a substituted or unsubstituted $C_{2-6}$ alkynyl group, a substituted or unsubstituted $C_{3-6}$ cycloalkyl group, or a 5- to 6-membered cyclic ether group,
$R^2$ represents a substituted or unsubstituted $C_{1-6}$ alkyl group, a substituted or unsubstituted C2-6 alkenyl group, or a substituted or unsubstituted $C_{2-6}$ alkynyl group,
$R^3$ represents a hydrogen atom, a substituted or unsubstituted $C_{1-6}$ alkyl group, a substituted or unsubstituted $C_{2-6}$ alkenyl group, a substituted or unsubstituted $C_{2-6}$ alkynyl group, a substituted or unsubstituted $C_{1-6}$ alkoxy group, a substituted or unsubstituted $C_{3-6}$ cycloalkyl group, or a substituted or unsubstituted phenyl group, and
Q represents a substituted or unsubstituted phenyl group or a substituted or unsubstituted naphthyl group.

2. The herbicidal composition according to Claim 1, wherein said compound (II) is

(B1) a herbicide belonging to a group of acetyl-CoA carboxylase (ACCase) inhibitors,
(B2) a herbicide belonging to a group of acetolactate synthase (ALS) or acetohydroxyacid synthase (AHAS) inhibitors,
(B3) a herbicide belonging to a group of microtubule polymerization inhibitors,
(B4) a herbicide belonging to a group of indoleacetic acid-like active (synthetic auxin) agents,
(B5) a herbicide belonging to a group of photosynthesis (photosystem 11) inhibitors - serine 264 binders,
(B6) a herbicide belonging to a group of photosynthesis (photosystem II) inhibitors - histidine 215 binders, (B9) a herbicide belonging to a group of 5-enolpyruvylshikimate-3-phosphate (EPSP) synthase inhibitors,
(B10) a herbicide belonging to a group of glutamine synthetase inhibitors,
(B12) a herbicide belonging to a group of inhibitors of phytoene desaturase (PDS) in the carotenoid biosynthesis pathway inducing chlorosis,
(B13) a herbicide belonging to a group of 1-deoxy-D-xylulose 5-phosphate (DOXP) synthase inhibitors inducing chlorosis,
(B14) a herbicide belonging to a group of protoporphyrinogen oxidase (PPO) inhibitors,
(B15) a herbicide belonging to a group of very long chain fatty acid (VLCFA) synthesis inhibitors,
(B18) a herbicide belonging to a group of dihydropteroate (DHP) synthase inhibitors,
(B19) a herbicide belonging to a group of auxin transport inhibitors,
(B22) a herbicide belonging to a group of photosystem I electron conversion agents,
(B23) a herbicide belonging to a group of mitosis / microtubule formation inhibitors,
(B24) a herbicide belonging to a group of uncoupling (membrane disrupting) agents,
(B27) a herbicide belonging to a group of 4-hydroxyphenylpyruvate dioxygenase (4-HPPD) inhibitors inducing chlorosis,
(B28) a herbicide belonging to a group of dihydroorotate dehydrogenase (DHODH) inhibitors,
(B29) a herbicide belonging to a group of cell wall (cellulose) synthesis inhibitors,

(B30) a herbicide belonging to a group of fatty acid thioesterase inhibitors,
(B31) a herbicide belonging to a group of serine-threonine protein phosphatase inhibitors,
(B32) a herbicide belonging to a group of solanesyl diphosphate synthase inhibitors,
(B33) a herbicide belonging to a group of homogentisate solanesyltransferase inhibitors,
(B34) a herbicide belonging to a group of lycopene cyclase inhibitors, or
(B0) other herbicides with unknown action mechanisms.

**3.** The herbicidal composition according to Claim 2, wherein said compound (II) is

(B1) clodinafop-propargyl, clofop, cyhalofop-butyl, diclofop-methyl, fenoxaprop-ethyl, fenthiaprop, fluazifop-butyl, haloxyfop-methyl, isoxapyrifop, metamifop, quizalofop-ethyl, alloxydim, butroxydim, clethodim, cloproxydim, cycloxydim, profoxydim, sethoxydim, tepraloxydim, tralkoxydim, pinoxaden, propaquizafop, fluazifop;
(B2) imazamethabenz-methyl, imazamox, imazapic, imazapyr, imazaquin, imazethapyr, bispyribac-sodium, pyribenzoxim (prodrug of bispyribac), pyriftalid, pyriminobac-methyl, pyrithiobac-sodium, pyrimisulfan, triafamone, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfron, flucetosulfuron, flupyrsulfuron-methyl-Na, foramsulfuron, halosulfuron-methyl, imazosulfuron, iodosulfuron-methyl-Na, mesosulfuron-methyl, metazosulfuron, metsulfuron-methyl, nicosulfuron, orthosulfamuron, oxasulfuron, primisulfuron-methyl, propyrisulfuron, prosulfuron, pyrazosulfuron-ethyl, rimsulfuron, sulfometuron-methyl, sulfosulfuron, thifensulfuron-methyl, triasulfuron, tribenuron-methyl, trifloxysulfuron-Na, triflusulfuron-methyl, tritosulfuron, flucarbazone, flucarbazone-Na, propoxycarbazone-Na, thiencarbazone-methyl, cloransulam-methyl, diclosulam, florasulam, flumetsulam, metosulam, penoxsulam, pyroxsulam, iodosulfuron-methyl, monosulfuron-methyl, iofensulfuron, metosulfam, mesosulfuron, trifloxysulfuron;
(B3) propyzamide (pronamide), tetrachlorothiophene (TCTP), chlorthal-dimethyl (DCPA), bethrodine (benefin, benfluralin), butralin, dinitramine, ethalfluralin, fluchloralin, isopropalin, nitralin, oryzalin, pendimethalin, prodiamine, profluralin, trifluralin, butamifos, DMPA, dithiopyr, thiazopyr, chlorthal;
(B4) chloramben, MDBA (dicamba), TCBA (2,3,8-TBA) (TBA), benazolin-ethyl, 2,4,5-T, 2,4-PA (2,4-D), 2,4-DB, 2,4-D 2-ethylhexyl ester, 2,4-D amine, clomeprop, dichlorprop, fenoprop, MCPA, MCPB, MCPP (mecoprop), chlorfenac (fenac), chlorfenprop, aminopyralid, clopyralid, florpyrauxifen, halauxifen, halauxifen-methyl, picloram, fluroxypyr, triclopyr, aminocyclopyrachlor, quinclorac, quinmerac, chlorflurenol, chlorflurenol-methyl, benazolin;
(B5) chloranocryl (dicryl), CMMP (pentanochlor), DCPA (propanil), chlorprocarb, desmedipham, phenisopham, phenmedipham, brompyrazon, PAC (chloridazon, pyrazon), ametryn, atraton, atrazine, aziprotryne (aziprotryn), chlorazine, CP 17029, cyanazine, cyprazine, desmetryn, dimethametryn, dipropetryn, eglinazine-ethyl, ipazine, methoprotryne (methoprotryn), procyazine, proglinazine-ethyl, prometon, prometryn, propazine, sebuthylazine, secbumeton, CAT (simazine), simetryn, terbumeton, terbuthylazine, terbutryn, trietazine, ethiozin, hexazinone, isomethiozin, metamitron, metribuzin, amicarbazone, bromacil, isocil, lenacil, terbacil, benzthiazuron, bromuron, buturon, chlorbromuron, chlorotoluron, chloroxuron, difenoxuron, dimefuron, DCMU (diuron), ethidimuron, fenuron, fluometuron, fluothiuron, isoproturon, isouron, linuron, methabenzthiazuron, metobenzuron, metobromuron, metoxuron, monolinuron, CMU (monuron), neburon, parafluron, siduron, tebuthiuron, thiazafluron, cypromid, cybutryne, karbutilate;
(B6) bentazon, bromofenoxim, bromoxynil, ioxynil, pyridate, pyridafol;
(B9) glyphosate;
(B10) bialaphos (bilanafos), glufosinate-ammonium, glufosinate;
(B12) fluridone, flurtamone, flurochloridone, norflurazon, beflubutamid, diflufenican, picolinafen, metflurazon;
(B13) bixlozone, clomazone;
(B14) acifluorfen, bifenox, chlomethoxynil (chlomethoxyfen), CNP (chlornitrofen), fluorodifen, fluoroglycofen-ethyl, CFNP (fluoronitrofen), fomesafen, lactofen, NIP (nitrofen), oxyfluorfen, butafenacil, chlorphthalim, cinidon-ethyl, flumiclorac-pentyl, flumioxazin, flumipropyn, fluthiacet-methyl, pentoxazone, saflufenacil, tiafenacil, trifludimoxazin, oxadiargyl, oxadiazon, azafenidin, carfentrazone-ethyl, sulfentrazone, pyraclonil, pyraflufen-ethyl, epyrifenacil, halosafen, ethoxyfen-ethyl, thidiazimin, benzfendizone, profluazol, flufenpyr-ethyl, bencarbazone;
(B15) cafenstrole, fentrazamide, ipfencarbazone, benfuresate, ethofumesate, fenoxasulfone, pyroxasulfone, indanofan, tridiphane, butylate, hexylthiocarbam (cycloate), dimepiperate, EPTC, esprocarb, molinate, orbencarb, pebulate, prosulfocarb, benthiocarb (thiobencarb), tiocarbazil, tri-allate, vernolate, acetochlor, alachlor, CDAA (allidochlor), butachlor, butenachlor, delachlor, diethatyl-ethyl, dimethachlor, dimethenamid, dimethenamid-P, metazachlor, metolachlor, S-metolachlor, pethoxamid, pretilachlor, propachlor, propisochlor, prynachlor, thenylchlor, flufenacet, mefenacet, anilofos, piperophos, diallate, dimesulfazet;
(B18) asulam;

(B19) diflufenzopyr-sodium, NPA (naptalam), diflufenzopyr;
(B22) cyperquat, diquat, morfamquat, paraquat;
(B23) barban, carbetamide, chlorbufam, IPC (chlorpropham), propham, swep;
(B24) dinosam, DNBP (dinoseb), dinoterb, DNOC, etinofen, medinoterb;
(B27) isoxaflutole, benzofenap, pyrasulfotole, pyrazolate (pyrazolynate), pyrazoxyfen, tolpyralate, topramezone, bicyclopyrone, fenquinotrione, mesotrione, sulcotrione, tefuryltrione, tembotrione, benzobicyclon, isoxachlortole, methoxyphenone, ketospiradox, tripyrasulfone, fenpyrazone, dioxopyritrione, cypyrafluone, bipyrazone, benquitrione, lancotrione sodium;
(B28) tetflupyrolimet;
(B29) indaziflam, triaziflam, isoxaben, DCBN (chlorthiamid), DBN (dichlobenil), flupoxam;
(B30) cinmethylin, methiozolin;
(B31) endothall;
(B32) aclonifen;
(B33) cyclopyrimorate;
(B34) ATA (amitrole); or
(B0) diphenamid, naproanilide, napropamide, flamprop-M, tebutam, SAP (bensulide), DPA (dalapon), tetrapion (flupropanate), TCA, mefluidide, perfluidone, bromobutide, cumyluron, difenzoquat, DSMA, dymron (daimuron), etobenzanid, fosamine, methyldymron, monalide, MSMA, oleic acid, oxaziclomefone, pelargonic acid, pyributicarb, ACN (quinoclamine), flamprop-isopropyl, dazomet, sodium chlorate, CAMA, cacodylic acid, metam, rimisoxafen, cyclopyranil, clacyfos.

**4.** The herbicidal composition according to Claim 3, wherein said compound (11) is haloxyfop-methyl, clethodim, pinoxaden, foramsulfuron, rimsulfuron, thifensulfuron-methyl, flucarbazone, flucarbazone-Na, thiencarbazone-methyl, flumetsulam, pendimethalin, trifluralin, MDBA (dicamba), 2,4-PA (2,4-D), 2,4-D 2-ethylhexyl ester, 2,4-D amine, MCPA, clopyralid, picloram, fluroxypyr, atrazine, CAT (simazine), terbuthylazine, metribuzin, amicarbazone, chlorotoluron, bentazon, bromoxynil, glyphosate, glufosinate-ammonium, picolinafen, clomazone, flumioxazin, saflufenacil, carfentrazone-ethyl, pyroxasulfone, prosulfocarb, tri-allate, acetochlor, alachlor, dimethenamid, dimethenamid-P, metolachlor, S-metolachlor, flufenacet, asulam, diflufenzopyr-sodium, diquat, mesotrione, isoxaben, cinmethylin, aclonifen, cyclopyrimorate, ATA (amitrole), epyrifenacil, isoxaflutole, sethoxydim, tepraloxydim, tetflupyrolimet, nicosulfuron, halauxifen, halauxifen-methyl, hexazinone, tebuthiuron, topramezone, flupoxam, sulfentrazone, halosulfuron-methyl, rimisoxafen, linuron or diflufenican.

**5.** The herbicidal composition according to Claim 4, wherein said compound (II) is haloxyfop-methyl, clethodim, pinoxaden, foramsulfuron, rimsulfuron, thifensulfuron-methyl, flucarbazone, flucarbazone-Na, thiencarbazone-methyl, flumetsulam, pendimethalin, trifluralin, MDBA (dicamba), 2,4-PA (2,4-D), 2,4-D 2-ethylhexyl ester, 2,4-D amine, MCPA, clopyralid, picloram, fluroxypyr, atrazine, CAT (simazine), terbuthylazine, metribuzin, amicarbazone, chlorotoluron, bentazon, bromoxynil, glyphosate, glufosinate-ammonium, picolinafen, clomazone, flumioxazin, saflufenacil, carfentrazone-ethyl, pyroxasulfone, prosulfocarb, tri-allate, acetochlor, dimethenamid-P, S-metolachlor, flufenacet, diflufenzopyr-sodium, diquat, mesotrione, cinmethylin, epyrifenacil, sethoxydim, halauxifen, topramezone, rimisoxafen, linuron or diflufenican.

**6.** The herbicidal composition according to any one of Claims 1 to 5, which comprises at least two compounds (II).

**7.** The herbicidal composition according to Claim 6, which comprises at least three compounds (II).

**8.** The herbicidal composition according to any one of Claims 1 to 7, further comprising at least one compound (III) as a phytotoxicity reducing agent.

**9.** The herbicidal composition according to any one of Claims 1 to 8, wherein said compound (III) is cloquintocet-mexyl, cyprosulfamide, furilazole, isoxadifen-ethyl, mefenpyr-diethyl or benoxacor.

## INTERNATIONAL SEARCH REPORT

International application No.
**PCT/JP2022/012499**

**A. CLASSIFICATION OF SUBJECT MATTER**

***A01N 43/90***(2006.01)i; ***A01N 33/22***(2006.01)i; ***A01N 35/10***(2006.01)i; ***A01N 37/22***(2006.01)i; ***A01N 37/26***(2006.01)i; ***A01N 37/40***(2006.01)i; ***A01N 41/10***(2006.01)i; ***A01N 43/10***(2006.01)i; ***A01N 43/16***(2006.01)i; ***A01N 43/36***(2006.01)i; ***A01N 43/40***(2006.01)i; ***A01N 43/54***(2006.01)i; ***A01N 43/653***(2006.01)i; ***A01N 43/70***(2006.01)i; ***A01N 43/707***(2006.01)i; ***A01N 43/80***(2006.01)i; ***A01N 43/824***(2006.01)i; ***A01N 43/84***(2006.01)i; ***A01N 43/88***(2006.01)i; ***A01N 47/12***(2006.01)i; ***A01N 47/16***(2006.01)i; ***A01N 47/24***(2006.01)i; ***A01N 47/30***(2006.01)i; ***A01N 47/34***(2006.01)i; ***A01N 47/36***(2006.01)i; ***A01N 47/38***(2006.01)i; ***A01N 57/20***(2006.01)i; ***A01P 13/00***(2006.01)i

FI: A01N43/90 103; A01N43/40 101H; A01N35/10; A01N47/36 101E; A01N47/38 A; A01N43/40 101J; A01N43/70; A01N43/707; A01N47/30 B; A01N43/88 105; A01N37/40; A01N57/20 G; A01N57/20 L; A01N43/40 101F; A01N43/80 101; A01N43/84 101; A01N43/54 F; A01N43/653 Q; A01N47/12 A; A01N47/12 Z; A01N37/26; A01N43/10 A; A01N37/22; A01N43/824 B; A01N47/24 B; A01N47/34 G; A01N41/10 A; A01N43/90 101; A01N33/22 101; A01N47/16 Z; A01N43/653 N; A01N43/36 C; A01N43/16 A; A01P13/00

According to International Patent Classification (IPC) or to both national classification and IPC

**B. FIELDS SEARCHED**

Minimum documentation searched (classification system followed by classification symbols)

A01N43/90; A01N33/22; A01N35/10; A01N37/22; A01N37/26; A01N37/40; A01N41/10; A01N43/10; A01N43/16; A01N43/36; A01N43/40; A01N43/54; A01N43/653; A01N43/70; A01N43/707; A01N43/80; A01N43/824; A01N43/84; A01N43/88; A01N47/12; A01N47/16; A01N47/24; A01N47/30; A01N47/34; A01N47/36; A01N47/38; A01N57/20; A01P13/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2014-528960 A (SYNGENTA LTD.) 30 October 2014 (2014-10-30) claims | 1-9 |
| A | JP 2017-518984 A (BAYER CROPSCIENCE AKTIENGESELLSCHAFT) 13 July 2017 (2017-07-13) claims | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 April 2022** | **17 May 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/012499**

**C. DOCUMENTS CONSIDERED TO BE RELEVANT**

| Category* | Citation of document, with indication, where appropriate, of the relevant passages | Relevant to claim No. |
|---|---|---|
| P, X | WO 2021/060240 A1 (NIPPON SODA CO., LTD.) 01 April 2021 (2021-04-01) claims, examples | 1-9 |

Form PCT/ISA/210 (second sheet) (January 2015)

**INTERNATIONAL SEARCH REPORT**
**Information on patent family members**

International application No.
**PCT/JP2022/012499**

| Patent document cited in search report | Publication date (day/month/year) | Patent family member(s) | Publication date (day/month/year) |
|---|---|---|---|
| JP 2014-528960 A | 30 October 2014 | US 2014/0256546 A1 claims | |
| | | GB 201117019 D | |
| | | WO 2013/050421 A1 | |
| | | EP 2763968 A1 | |
| | | CA 2850013 A | |
| | | CN 103874688 A | |
| JP 2017-518984 A | 13 July 2017 | US 2017/0096402 A1 claims | |
| | | WO 2015/177109 A1 | |
| | | EP 3145917 A1 | |
| | | CN 106536487 A | |
| WO 2021/060240 A1 | 01 April 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013050421 A1


### Non-patent literature cited in the description


- **COLBY, S. R.** Calculating synergistic and antagonistic responses of herbicide combinations. *Weeds,* 1967, vol. 15, 20-22